# EUROPEAN PATENT APPLICATION

(11) **EP 4 456 626 A1**
(43) Date of publication of application: **30.10.2024**
(21) Application number: 23777707.3
(22) Date of filing: 21.02.2023
(51) Int. Cl.: H04W 68/00, H04W 76/40

(54) **COMMUNICATION METHOD AND APPARATUS**

(30) Priority: 29.03.2022 CN 202210326256
(71) Applicant: Huawei Technologies Co., Ltd., Shenzhen, Guangdong 518129 (CN)
(72) Inventor: JIA, Jianxin, Shenzhen, Guangdong 518129 (CN); LI, Meng, Shenzhen, Guangdong 518129 (CN); WU, Wenfu, Shenzhen, Guangdong 518129 (CN); ZONG, Zaifeng, Shenzhen, Guangdong 518129 (CN); ZHU, Fenqin, Shenzhen, Guangdong 518129 (CN); WANG, Yan, Shenzhen, Guangdong 518129 (CN)
(74) Representative: Körber, Martin Hans
(86) International application number: PCT/CN2023/077490
(87) International publication number: WO 2023/185328

(57) **Abstract**

Disclosed are a communication method and apparatus, to effectively manage a first multicast/broadcast session and improve network resource utilization. According to the method, when UE that has joined a first multicast/broadcast service and is in a radio resource control inactive state determines that an access network device changes to a first access network device, or when a terminal device determines that a cell changes to a cell of the first access network device, the terminal device may send at least one of a first message, a second message, a third message, a ninth message, or a tenth message to the first access network device. Correspondingly, the first access network device may learn, based on at least one of the first message, the second message, the third message, the ninth message, or the tenth message, that the terminal device moves to a coverage area of the first access network device to receive the first multicast/broadcast service, to effectively create a first multicast/broadcast session or update context of the first multicast/broadcast session.

## Description

### CROSS-REFERENCE TO RELATED APPLICATIONS

This application claims priority to Chinese Patent Application No. 202210326256.6, filed with the China National Intellectual Property Administration on March 29, 2022, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With development of the mobile internet, mobile high-definition video services are experiencing a surge. Users gradually change from watching hot programs in a conventional manner, such as on fixed televisions, to watching hot programs on mobile phone terminals and the mobile internet. Therefore, video services have increasingly strong impact on mobile networks. If a radio access network (radio access network, RAN) device, for example, a base station, can optimize transmission of video services in an air interface multicast/broadcast service (Multicast/Broadcast Service, MBS) data transmission mode, impact of video traffic on the mobile networks will be greatly reduced.

Currently, 3rd generation partnership project (3rd generation partnership project, 3GPP) researchers have proposed that a terminal device (user equipment, UE) can be supported in receiving data of a multicast/broadcast service in a radio resource control (radio resource control, RRC) inactive (RRC-inactive) state. However, for the UE in the RRC inactive state, the base station cannot learn whether the UE moves out of a range of the base station, and can only learn whether the UE moves in different radio access network notification areas (RAN notification area, RNA). However, the data of the multicast/broadcast service is transmitted to the UE at a granularity of the base station and the service. If the UE moves out of the range of the base station, and an RNA in which the UE is located does not change, the base station cannot learn movement of the UE. Therefore, a multicast/broadcast session cannot be effectively managed, and network resource utilization is reduced.

### SUMMARY

This application provides a communication method and apparatus, to effectively manage a multicast/broadcast session of a terminal device in an RRC inactive state, and improve network resource utilization.

According to a first aspect, this application provides a communication method. The method may be implemented by a terminal device or a component in the terminal device, and the component is at least one of a processor, a transceiver, a processing module, or a transceiver module. For example, the method is performed by the terminal device. The method includes: The terminal device determines that an access network device changes to a first access network device, or determines that a cell changes to a cell of the first access network device, where the terminal device has joined a first multicast/broadcast service and is in an RRC inactive state. The terminal device sends at least one of a first message, a second message, a third message, a ninth message, or a tenth message to the first access network device, where the first message indicates the first access network device to send data of the first multicast/broadcast service; the second message indicates the first access network device to update context of the first multicast/broadcast service; the third message is used to resume an RRC connection of the terminal device; the ninth message is used to activate a user plane connection; and the tenth message is used to request registration.

According to the method, when UE that has joined the first multicast/broadcast service and is in the inactive state determines that a base station changes to the first access network device, or when the terminal device determines that the cell changes to the cell of the first access network device, the terminal device may send at least one of the first message, the second message, the third message, the ninth message, or the tenth message to the first access network device. Correspondingly, the first access network device may learn, based on at least one of the first message, the second message, the third message, the ninth message, or the tenth message, that a terminal device moves to a coverage area of the first access network device to receive the first multicast/broadcast service, and creates a first multicast/broadcast session or updates context of the first multicast/broadcast session in a timely manner, to effectively manage the first multicast/broadcast session, and improve network resource utilization.

It should be understood that the multicast/broadcast session in this application may be replaced with the multicast/broadcast service. In addition, the multicast/broadcast session may be further used to transmit multicast/broadcast service data or transmit the multicast/broadcast service.

In addition, in this application, "determine" may be replaced with "find".

In a possible implementation, the terminal device is allowed to receive multicast/broadcast in the radio resource control inactive state.

In a possible implementation, the terminal device may receive first information, where the first information includes an identifier of the first access network device and/or an identifier of the cell of the first access network device. The terminal device may further determine, based on the first information, that the access network device changes to the first access network device, or determines that the cell changes to the cell of the first access network device.

Based on this implementation, the terminal device may identify, in the RRC inactive state, whether to send an access network device or cell change, to improve accuracy of identifying the access network device or cell change in a movement process.

In a possible implementation, the terminal device may receive second information, where the second information indicates at least one of the following: a quantity of digits of the first information that are occupied by the identifier of the access network device; a coding scheme of the identifier of the access network device in the first information; and a coding scheme of the identifier of the cell in the first information. For example, the identifier of the access network device may include a base station identifier, and the identifier of the cell may include a cell identifier (cell ID).

Based on this implementation, the terminal device may correctly interpret, based on the second information, the identifier of the access network device and the identifier of the cell that are in the first information, to further improve accuracy of identifying the access network device or cell change.

In a possible implementation, the terminal device may further receive the data of the first multicast/broadcast service (or determine that the data of the first multicast/broadcast service is received), and send the second message and/or the third message, send the second message and/or the ninth message, or send the second message and/or the tenth message to the first access network device.

Based on this implementation, if the terminal device can still receive the data of the first multicast/broadcast service after the access network device changes or the cell changes, the terminal device may send the second message and/or the third message, the second message and/or the ninth message, or the second message and/or the tenth message to the first access network device, so that the first access network device updates the context of the first multicast/broadcast session in a timely manner.

In a possible implementation, if the terminal device determines (or finds) that there is no transmission of the first multicast/broadcast service (or no transmission of the first multicast/broadcast service is received), the terminal device sends the first message and/or the third message, the first message and/or the ninth message, or the first message and/or the tenth message to the first access network device.

Based on this implementation, if the terminal device receives no data of the first multicast/broadcast service after the access network device changes or the cell changes, the terminal device may send the first message and/or the third message to the first access network device, so that the first access network device establishes the first multicast/broadcast session based on the first message and/or the third message, the first message and/or the ninth message, or the first message and/or the tenth message, or sends a reception configuration of the first multicast/broadcast service to the terminal device, to resume transmission of the first multicast/broadcast service of the terminal device, and update the context of the first multicast/broadcast session in a timely manner.

In a possible implementation, at least one of the first message, the second message, or the third message includes at least one of an identifier of the terminal device, an identifier of the first multicast/broadcast service, a first protocol data unit PDU session identifier, or a sending reason of the message (or referred to as a reason for sending the message), and the first PDU session is associated with the first multicast/broadcast service.

In a possible implementation, the terminal device may further receive information about a first area, where the first area is a service area of a second access network device. The terminal device may further determine to move out of the first area, and send the third message.

Based on this implementation, if the terminal device moves from the second access network device to the first access network device, or the access network device of the terminal device changes from the second access network device to the first access network device, and the terminal device receives indication information of the service area (that is, the first area) of the second access network device, after moving out of the first area, the terminal device may determine that the access network device changes, and therefore may send the third message to the first access network device.

In a possible implementation, if the terminal device determines that the access network device changes from the second access network device to the first access network device, at least one of the first message, the second message, or the third message includes an identifier and/or an address of the second access network device.

Based on this implementation, if the terminal device moves from the second access network device to the first access network device, the terminal device may include the identifier of the second access network device in at least one of the first message, the second message, or the third message sent to the first access network device, to indicate the second access network device to the first access network device, so that the first access network device notifies, in a timely manner, the second access network device to update the context of the first multicast/broadcast session.

In a possible implementation, the terminal device may determine to move out of an access network notification area, and the terminal device may further send the ninth message. Therefore, the terminal device may send the ninth message when determining that no data of the first multicast/broadcast service is received and determining to move out of the access network notification area.

In a possible implementation, the terminal device may determine to move out of a registration area, and the terminal device may further send the tenth message. Therefore, the terminal device may send the tenth message when determining that no data of the first multicast/broadcast service is received and determining to move out of the registration area.

In a possible implementation, the terminal device receives a seventh message from the first access network device, where the seventh message includes a first configuration or first capability information, the first configuration includes a configuration used to receive the first multicast/broadcast service, and the first capability information indicates whether the first access network device supports receiving in a radio resource control RRC inactive state, or the first capability information indicates whether the first access network device supports the terminal device in receiving the first multicast/broadcast service in the RRC inactive state, or the first capability information indicates whether the first access network device supports the terminal device in receiving a multicast/broadcast service in the RRC inactive state.

Based on this implementation, the terminal device may obtain, based on the seventh message, the reception configuration of the first multicast/broadcast service, or obtain capability indication information indicating whether the first access network device supports in receiving the first multicast/broadcast data in the RRC inactive state.

According to a second aspect, this application provides a communication method. The method may be implemented by a terminal device or a component in the terminal device, and the component is at least one of a processor, a transceiver, a processing module, or a transceiver module. For example, the method is performed by the terminal device. The method includes: The terminal device determines that no data of a first multicast/broadcast service is received, and the terminal device has joined the first multicast/broadcast service and is in a radio resource control inactive state. The terminal device sends at least one of a first message, a second message, a third message, a ninth message, or a tenth message to a first access network device, where the first message indicates the first access network device to send data of the first multicast/broadcast service; the second message notifies/indicates the first access network device to update context of the first multicast/broadcast service; the third message is used to resume an RRC connection of the terminal device; the ninth message is used to activate a user plane connection; and the tenth message is used to request registration.

It should be noted that in this application, "notify" may be replaced with "indicate".

It should be noted that in this application, "the terminal device determines that no data of a first multicast/broadcast service is received" may be replaced with "the terminal device receives no configuration (configuration) of the first multicast/broadcast service", "the terminal device determines that no first multicast/broadcast service data is received or no configuration of the first multicast/broadcast service is received", "the terminal device determines that no configuration of the data of the first multicast/broadcast service is received", or "the terminal device determines that no configuration of the first multicast/broadcast service is received". "The terminal device receives no configuration of the first multicast/broadcast service" may also be understood as that "a configuration of the first multicast/broadcast service is not obtainable/not applicable/not available (not available)". It should be understood that the configuration of the first multicast/broadcast service may be a multicast radio bearer (multicast radio bearer, MRB) configuration of the first multicast/broadcast service. The configuration of the first multicast/broadcast service may include configuration information, for example, configuration information of a multicast radio bearer (multicast radio bearer, MRB) of the first multicast/broadcast service (for example, an identifier of the MRB), or for another example, a point-to-multipoint configuration (point To multipoint configuration, PTM configuration). The configuration of the data may include a multicast traffic channel configuration (multicast traffic channel configuration, MTCH configuration). This is not limited.

Based on the foregoing method, when determining that no data of the first multicast/broadcast service is received, the terminal device that has joined the first multicast/broadcast service and is in the RRC inactive state may send at least one of the first message, the second message, the third message, the ninth message, or the tenth message to the first access network device, so that the first access network device can learn, in a timely manner, that the terminal device is in a coverage area of the first access network device and needs to receive the data of the first multicast/broadcast service in the RRC inactive state. In this way, the first access network device creates a first multicast/broadcast session or updates context of the first multicast/broadcast session in a timely manner, to effectively manage the first multicast/broadcast session, and improve network resource utilization.

In a possible implementation, the terminal device determines that an access network device changes to the first access network device, or determines that a cell changes to a cell of the first access network device.

In a possible implementation, the terminal device is allowed to receive multicast/broadcast in the radio resource control inactive state.

In a possible implementation, the terminal device may receive first information, where the first information includes an identifier of the first access network device and/or an identifier of the cell of the first access network device. The terminal device determines, based on the first information, that the access network device changes to the first access network device, or determines that the cell changes to the cell of the first access network device.

In a possible implementation, the terminal device may further receive second information, where the second information indicates at least one of the following: a quantity of digits of the first information that are occupied by the identifier of the access network device; a coding scheme of the identifier of the access network device in the first information; and a coding scheme of the identifier of the cell in the first information.

In a possible implementation, if the terminal device may further receive the data of the first multicast/broadcast service (or determine that the data of the first multicast/broadcast service is received), the terminal device may send the second message and/or the third message to the first access network device, the terminal device may send the second message and/or the ninth message to the first access network device, or the terminal device may send the second message and/or the tenth message to the first access network device.

Based on this implementation, if the terminal device can still receive the data of the first multicast/broadcast service after the access network device changes or the cell changes, the terminal device may send the second message and/or the third message to the first access network device, so that the first access network device updates the context of the first multicast/broadcast session in a timely manner. Alternatively, in this case, the terminal device may send the ninth message or the tenth message to the first access network device, so that the first access network device sends the ninth message or the tenth message to an AMF. The AMF further sends the ninth message or the tenth message to an SMF, triggers activation of an ID of an associated PDU session, and further triggers establishment of the first multicast/broadcast session to a first base station.

In a possible implementation, if the terminal device determines (or finds) that there is no transmission of the data of the first multicast/broadcast service (or no transmission of the data of the first multicast/broadcast service is received), the terminal device may send the first message and/or the third message to the first access network device, the terminal device sends the first message and/or the ninth message to the first access network device, or the terminal device sends the first message and/or the tenth message to the first access network device.

Based on this implementation, if the terminal device receives no data of the first multicast/broadcast service after the access network device changes or the cell changes, the terminal device may send the first message and/or the third message to the first access network device, so that the first access network device establishes the first multicast/broadcast session based on the first message and/or the third message, or sends a reception configuration of the first multicast/broadcast service to the terminal device. Alternatively, in this case, the terminal device may send the ninth message or the tenth message to the first access network device, so that the first access network device sends the ninth message or the tenth message to an AMF. The AMF further sends the ninth message or the tenth message to an SMF, triggers activation of an ID of an associated PDU session, and further triggers establishment of the first multicast/broadcast session to a first base station.

In a possible implementation, at least one of the first message, the second message, the third message, the ninth message, or the tenth message includes at least one of an identifier of the terminal device, an identifier of the first multicast/broadcast service, a first protocol data unit PDU session identifier, or a sending reason of the message, and the first PDU session is associated with the first multicast/broadcast service.

In a possible implementation, the terminal device may further receive information about a first area, where the first area is a service area of a second access network device. The terminal device may further determine to move out of the first area, and send the third message.

In a possible implementation, if the terminal device determines that the access network device changes from the second access network device to the first access network device, at least one of the first message, the second message, or the third message includes an identifier and/or an address of the second access network device.

In a possible implementation, the terminal device may determine to move out of an access network notification area, and the terminal device may further send the ninth message. Therefore, the terminal device may send the ninth message when determining that no data of the first multicast/broadcast service is received and determining to move out of the access network notification area.

In a possible implementation, the terminal device may determine to move out of a registration area, and the terminal device may further send the tenth message. Therefore, the terminal device may send the tenth message when determining that no data of the first multicast/broadcast service is received and determining to move out of the registration area.

In a possible implementation, the terminal device may receive a seventh message from the first access network device, where the seventh message includes a first configuration or first capability information, the first configuration includes a configuration used to receive the first multicast/broadcast service, and the first capability information indicates whether the first access network device supports receiving in the radio resource control RRC inactive state, or the first capability information indicates whether the first access network device supports in receiving the first multicast/broadcast service in the RRC inactive state, or the first capability information indicates whether the first access network device supports UE in receiving the data of the first multicast/broadcast service in the RRC inactive state.

In a possible implementation, the terminal device may send the ninth message based on the first capability information. For example, the ninth message is sent when the first capability information indicates that the first access network device supports in receiving the first multicast/broadcast service by the UE in the RRC inactive state.

According to a third aspect, this application provides a communication method. The method may be implemented by a first access network device or a component in the first access network device, and the component is at least one of a processor, a transceiver, a processing module, or a transceiver module. For example, the method is performed by the first access network device. The method includes: The first access network device receives at least one of a first message, a second message, a third message, a ninth message, or a tenth message from a terminal device, where the first message notifies/indicates to send first multicast/broadcast data, and the terminal device has joined a first multicast/broadcast service and is in a radio resource control inactive state; the second message notifies/indicates the first access network device to update context of the first multicast/broadcast service; the third message is used to resume an RRC connection of the terminal device; the ninth message is used to activate a user plane connection; and the tenth message is used to request registration. At least one of the first message, the second message, or the third message includes an identifier and/or an address of a second access network device. The first access network device sends a fourth message, a fifth message, or an eighth message to the second access network device based on the identifier and/or the address of the second access network device, where the fourth message is used to update the context of the first multicast/broadcast service, the fifth message is used to extract context of the terminal device, and the eighth message is used to authenticate whether the terminal device has joined the first multicast/broadcast service.

In a possible implementation, the first access network device may further send the ninth message or the tenth message to an access management network element, where the ninth message or the tenth message carries a first protocol data unit PDU session identifier, the first protocol data unit PDU session identifier carried in the ninth message or the tenth message is used to activate a first PDU session or is used to activate a connection of the first PDU session, and the first PDU session is associated with the first multicast/broadcast service.

In a possible implementation, at least one of the first message, the second message, or the third message includes an identifier of the terminal device and/or an identifier of the first multicast/broadcast service.

In a possible implementation, the fourth message, the fifth message, or the eighth message includes an identifier of the terminal device and/or an identifier of the first multicast/broadcast service.

In a possible implementation, the first access network device may further receive a sixth message from the second access network device, where the sixth message includes at least one piece of the following information: a first configuration, context information of the terminal device, information about the first multicast/broadcast service, and first capability information. The first configuration includes a configuration used to receive the first multicast/broadcast service. The first access network device sends a seventh message, where the seventh message includes the first configuration or the first capability information. The first capability information indicates whether the first access network device supports UE in receiving the data of the first multicast/broadcast service in the RRC inactive state.

According to a fourth aspect, this application provides a communication method. The method may be implemented by a second access network device or a component in the second access network device, and the component is at least one of a processor, a transceiver, a processing module, or a transceiver module. For example, the method is performed by the second access network device. The method includes: The second access network device receives at least one of a fourth message, a fifth message, or an eighth message from a first access network device, where the fourth message is used to update context of a first multicast/broadcast service, the fifth message is used to extract context of a terminal device, the eighth message is used to authenticate whether the terminal device has joined the first multicast/broadcast service, and the terminal device has joined the first multicast/broadcast service and is in a radio resource control inactive state. The first access network device updates the context of the first multicast/broadcast service.

In a possible implementation, the fourth message, the fifth message, or the eighth message includes an identifier of the terminal device and/or an identifier of the first multicast/broadcast service.

In a possible implementation, the second access network device may further update a quantity of terminal devices in the context of the first multicast/broadcast service based on a quantity of terminal devices.

In a possible implementation, at least one of the fourth message, the fifth message, or the eighth message includes the identifier of the terminal device, and the second access network device may further delete (or remove) the identifier of the terminal device from the context of the first multicast/broadcast service.

In a possible implementation, the second access network device may further send a sixth message to the first access network device, where the sixth message includes a first configuration, and the first configuration includes a configuration used to receive the first multicast/broadcast service.

In a possible implementation, the second access network device sends information about a first area to the terminal device, where the first area includes at least one of the following: an identifier of the second access network device, a cell included in the second access network device, a tracking area code of the second access network device, an access network area code of the second access network device, and a service area of the second access network device.

In a possible implementation, when the second access network device determines that a first timer expires, the second access network device releases a first transmission resource, where the first transmission resource is used to transmit the first multicast/broadcast service. Optionally, the first transmission resource includes a first multicast/broadcast session, and may further include shared multicast/broadcast service traffic delivery of the first multicast/broadcast session.

According to a fifth aspect, this application further provides a communication method. The method may be implemented by a third access network device or a component in the third access network device, and the component is at least one of a processor, a transceiver, a processing module, or a transceiver module. For example, the method is performed by the first access network device. The method includes: The third access network device establishes a first multicast/broadcast session, where the first multicast/broadcast session is used to transmit data of a first multicast/broadcast service. The third access network device sends a first indication to at least one fourth access network device, where the first indication indicates or triggers the fourth access network device to establish the first multicast/broadcast service session or establish shared multicast/broadcast service traffic delivery of the first multicast/broadcast session. The fourth access network device and the third access network device are located in or in a same RNA area, and the first multicast/broadcast session is used to transmit the first multicast/broadcast service.

According to the method, when the third access network device in the RNA area establishes the first multicast/broadcast session, the third access network device may trigger, based on the first indication, another access network device (that is, the fourth access network device) in the RNA area to establish the first multicast/broadcast session. Therefore, even if the terminal device moves from a coverage area of the third access network device to a coverage area of another fourth access network device, because the fourth access network device has established the first multicast/broadcast session, the terminal device may receive the data of the first multicast/broadcast service from the fourth access network device, and the fourth access network device does not need to establish the first multicast/broadcast session. This can reduce a transmission delay of the multicast/broadcast service and improve service quality.

In a possible implementation, the third access network device finds that no terminal device served by the third access network device receives the first multicast/broadcast session. For example, there is no identifier of any terminal device in session context of the first multicast/broadcast service, or a quantity of terminal devices in the session context is 0. The third access network device determines or finds that no terminal device served by the fourth access network device receives the first multicast/broadcast session. The third access network device releases the first multicast/broadcast session or releases shared multicast/broadcast service traffic delivery of the first multicast/broadcast session. The fourth access network device and the third access network device are located in or in a same RNA area, and the first multicast/broadcast session is used to transmit the first multicast/broadcast service.

Based on this implementation, after determining that no terminal device served by any access network device in the RNA area receives the first multicast/broadcast session, the third access network device releases the first multicast/broadcast session or releases shared multicast/broadcast service traffic delivery of the first multicast/broadcast session; otherwise, at least one terminal device served by at least one access network device in the RNA receives the first multicast/broadcast session, and the third access network device reserves the first multicast/broadcast session or reserves shared multicast/broadcast service traffic delivery of the first multicast/broadcast session.

In a possible implementation, the third access network device may receive a second indication from the fourth access network device, where the second indication indicates that no terminal device served by the fourth access network device receives the first multicast/broadcast session, or the second indication may notify that no terminal device served by the fourth access network device receives the first multicast/broadcast session. The first multicast/broadcast session is used to transmit the first multicast/broadcast session, or the second indication is further used to notify that a terminal device served by the fourth access network device receives the first multicast/broadcast session.

Based on this implementation, the third access network device may determine, based on the second indication from the another fourth access network device, that no terminal device served by the fourth access network device receives the first multicast/broadcast session, where the first multicast/broadcast session is used to transmit the first multicast/broadcast service.

In a possible implementation, the third access network device may send a third indication to the fourth access network device, where the third indication indicates that no terminal device served by the third access network device receives the first multicast/broadcast session, or the third indication is used to determine whether a terminal device served by the fourth access network device receives the first multicast/broadcast session, where the first multicast/broadcast session is used to transmit the first multicast/broadcast service.

Based on this implementation, the third access network device may send the third indication after no terminal device served by the third access network device receives the first multicast/broadcast session, to trigger the fourth access network device to send, based on the third indication, the second indication to the third access network device.

In a possible implementation, the third access network device sends a fifth indication to the fourth access network device, where the fifth indication is used to trigger the fourth access network device to release the first multicast/broadcast session.

Based on this implementation, when no terminal device served by the third access network device receives the first multicast/broadcast session and triggers to release the first multicast/broadcast session, the third access network device may notify the another fourth access network device to release the first multicast/broadcast session. Optionally, the third access network device is a last access network device that is in the RNA area and in which no terminal device served by the third access network device receives the first multicast/broadcast session.

In a possible implementation, any one of the first indication, the second indication, the third indication, the fourth indication, or the fifth indication includes an identifier of the first multicast/broadcast service. In addition, any one of the first indication, the second indication, the third indication, the fourth indication, or the fifth indication may be carried in an Xn message, an X2 message, or an interaction message or a communication message between base stations.

According to a sixth aspect, this application further provides a communication apparatus. The communication apparatus may be a terminal device, an access network device, a component in the terminal device, or a component in the access network device. The communication apparatus has a function of implementing the methods in the first aspect to the fifth aspect and the possible implementations of the first aspect to the fifth aspect. The function may be implemented by hardware, or may be implemented by hardware executing corresponding software. The hardware or the software includes one or more modules corresponding to the foregoing function.

In a possible implementation, a structure of the communication apparatus includes a communication module and a processing module. The modules or units may perform corresponding functions in the first aspect to the fifth aspect and the possible implementations of the first aspect to the fifth aspect. For details, refer to detailed descriptions in the method examples. Details are not described herein again. For example, the communication module may include a receiving module and/or a sending module.

In a possible implementation, a structure of the communication apparatus includes a communication interface and a processor, and optionally further includes a memory. The communication interface is configured to receive and send information or data, and is configured to communicate and interact with another device in a communication network. The processor is configured to support the communication apparatus in performing corresponding functions in the first aspect to the fifth aspect and the possible implementations of the first aspect to the fifth aspect. The memory is coupled to the processor, and stores program instructions and data that are necessary for the communication apparatus.

According to a seventh aspect, an embodiment of this application provides a communication system. The communication system may include a communication apparatus configured to implement the method shown in the first aspect or the second aspect and the possible implementations of the first aspect or the second aspect and a communication apparatus configured to implement the communication method shown in the third aspect and the possible implementations of the third aspect, and optionally, may further include a communication apparatus configured to implement the method in the fourth aspect and any possible implementation of the fourth aspect. Alternatively, the communication system may include a communication apparatus configured to implement the method shown in the first aspect or the second aspect and the possible implementations of the first aspect or the second aspect, and include a fourth access network device located in a same RNA area with the communication apparatus.

According to an eighth aspect, an embodiment of this application provides a computer-readable storage medium. The computer-readable storage medium stores program instructions, and when the program instructions are run on a computer, the computer is enabled to perform the methods in the first aspect to the fifth aspect and any possible implementation of the first aspect to the fifth aspect in embodiments of this application. For example, the computer-readable storage medium may be any usable medium that can be accessed by the computer. By way of example rather than limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a ninth aspect, an embodiment of this application provides a computer program product, including computer program code or instructions. When the computer program code or the instructions are run on a computer, the methods in the first aspect to the fifth aspect or any possible implementation of the first aspect to the fifth aspect is performed.

According to a tenth aspect, this application further provides a chip, including a processor. The processor is coupled to a memory, and is configured to read and execute program instructions stored in the memory, so that the chip implements the methods in the first aspect to the fifth aspect or any possible implementation of the first aspect to the fifth aspect.

For all aspects of the second aspect to the tenth aspect and technical effect that may be achieved by each aspect, refer to the descriptions of beneficial effect of the methods in the first aspect to the fifth aspect and any possible implementation of the first aspect to the fifth aspect. Details are not described herein again.

### BRIEF DESCRIPTION OF DRAWINGS

FIG. 1A is a diagram of an architecture of a communication system according to this application;
FIG. 1B is a diagram of an architecture of another communication system according to this application;
FIG. 2 is a diagram of an architecture of another communication system according to this application;
FIG. 3 is a diagram of an architecture of another communication system according to this application;
FIG. 4 is a diagram of data transmission and sending according to this application;
FIG. 5 is a diagram of another data transmission and sending according to this application;
FIG. 6 is a schematic flowchart of a communication method according to this application;
FIG. 7 is a schematic flowchart of another communication method according to this application;
FIG. 8 is a schematic flowchart of another communication method according to this application;
FIG. 9 is a schematic flowchart of another communication method according to this application;
FIG. 10 is a schematic flowchart of another communication method according to this application;
FIG. 11 is a schematic flowchart of another communication method according to this application;
FIG. 12 is a schematic flowchart of another communication method according to this application;
FIG. 13 is a schematic flowchart of another communication method according to this application;
FIG. 14 is a diagram of a structure of a communication apparatus according to this application; and
FIG. 15 is a diagram of a structure of another communication apparatus according to this application.

### DESCRIPTION OF EMBODIMENTS

To make the objectives, technical solutions, and advantages of this application clearer, the following further describes this application in detail with reference to the accompanying drawings.

To facilitate understanding of the technical solutions in this application, the following first briefly describes technical terms in this application.

The following describes some terms of a system architecture designed in embodiments of this application, to help a person skilled in the art have a better understanding.

User equipment, also referred to as a terminal device, is a device having a wireless transceiver function, and may communicate with one or more core network (core network, CN) devices (or may also be referred to as core devices) via an access network device (or may also be referred to as an access device) in a (radio) access network (radio access network, (R)AN) device.

The user equipment may also be referred to as an access terminal, a terminal, a subscriber unit, a subscriber station, a mobile station, a mobile console, a remote station, a remote terminal, a mobile device, a user terminal, a user agent, a user apparatus, or the like. The user equipment may be deployed in (deployed in) land, where the deployment includes indoor or outdoor, or handheld or vehicle-mounted deployment; may be deployed on a water surface (such as a ship); or may be deployed in the air (for example, on an airplane, a balloon, or a satellite). The user equipment may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the user equipment may be a handheld device or a computing device that has a wireless communication function, another device connected to a wireless modem, a vehicle-mounted device, a wearable device, an uncrewed aerial vehicle, a terminal in the internet of things or the internet of vehicles, a terminal of any form in a 5th generation (5th-generation, 5G) mobile communication network or a future network, relay user equipment, a terminal in a future evolved public land mobile network (public land mobile network, PLMN), or the like. The relay user equipment may be, for example, a 5G residential gateway (residential gateway, RG). For example, the user equipment may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. A type, a category, or the like of the terminal device is not limited in embodiments of this application.

The user equipment may further include a terminal-side device, for example, a local switch (local switch, LSW) and/or customer premise equipment (customer premise equipment, CPE), or the user equipment may access a network via the LSE or the CPE.

In embodiments of this application, user equipment (user equipment, UE) that is registered with a network may be understood as a user. One UE may correspond to one subscriber identity module (subscriber identity module, SIM) card. To be specific, when one SIM card is installed on the terminal device, the terminal device corresponds to one user UE, and when a plurality of SIM cards are installed on the terminal device, the terminal device corresponds to a plurality of user UEs.

In this application, a network device is a device that can provide a radio access function for a terminal, for example, a (R)AN device. The network device may support at least one wireless communication technology, for example, long term evolution (long term evolution, LTE), new radio (new radio, NR), or wideband code division multiple access (wideband code division multiple access, WCDMA).

For another example, the network device may include a core network device, and the core network device includes, for example, a core network element (network function, NF) such as an access and mobility management function (access and mobility management function, AMF).

In this application, the (radio) access network device may be configured to provide a network access function for authorized user equipment in a specific area, and can use transmission tunnels of different quality based on a level of the user equipment, a service requirement, and the like.

The (R)AN device can manage radio resources and provide an access service for the user equipment, to forward a control signal and user equipment data between the user equipment and a core network. The (R)AN may also be understood as a base station in a conventional network.

For example, the access network device in embodiments of this application may be any communication device having a wireless transceiver function for communicating with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G system such as an NR system, may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in a core network. This is not limited in this application.

A user plane network element is used for packet routing and forwarding, handling of quality of service (quality of service, QoS) of user plane data, and the like.

In a 5G communication system, the user plane network element may be a user plane function (user plane function, UPF) network element. In a future communication system, the user plane network element may still be the UPF network element, or may have another name. This is not limited in this application.

A data network element is configured to provide a network for data transmission.

In a 5G communication system, the data network element may be a data network (data network, DN) element. In a future communication system, the data network element may still be the DN network element, or may have another name. This is not limited in this application.

An authentication server is used to perform security authentication for a user. In a 5G communication system, the authentication server is an authentication server function (authentication server function, AUSF) network element.

A mobility management network element is mainly configured to perform mobility management, access management, and the like. In a 5G communication system, the access management network element may be an AMF, and mainly performs functions such as mobility management and access authentication/authorization. In addition, the mobility management network element is further responsible for transferring a user policy between a terminal and a policy control function (policy control function, PCF) network element.

A network data analytics network element is mainly configured to provide a network data analytics function. In a 5G communication system, the network data analytics network element may be a network data analytics function (network data analytics function, NWDAF).

A session management network element is mainly configured to: manage a session, allocate and manage an internet protocol (internet protocol, IP) address of user equipment, select an endpoint that can manage a user plane function interface and a policy control and charging function interface, perform downlink data notification, and the like.

In a 5G communication system, the session management network element may be a session management function (session management function, SMF) network element, and implements IP address allocation for a terminal, UPF selection, charging, QoS policy control, and the like.

An application network element may be an application function (application function, AF) network element in a 5G communication system, represents an application function of a third party or an operator, is an interface for obtaining external application data in a 5G network, and is mainly configured to transfer a requirement of an application side for a network side.

A unified data management network element is responsible for management of a user identifier, subscription data, and authentication data, and serving network element registration management of a user. In a 5G communication system, the unified data management network element may be unified data management (unified data management, UDM).

A unified data repository network element is configured to store and retrieve subscription data of UE, and the like. In a 5G communication system, the unified data repository network element may be a unified data repository (unified data repository, UDR) function.

A policy control network element includes a user subscription data management function, a policy control function, a charging policy control function, quality of service (quality of service, QoS) control, and the like, is a unified policy framework used to guide network behavior, and provides policy rule information and the like for a control plane function network element (for example, an AMF or an SMF network element).

In a 5G communication system, the policy control network element may be a PCF.

A network function repository function network element provides a storage function and a selection function of network functional entity information for another core network element. In a 5G communication system, the network element may be a network function repository function (network function repository function, NRF) network element.

An unstructured data storage network element stores and retrieves unstructured data of the unstructured data storage network element, for example, context of UE. In a 5G communication system, the unstructured data storage network element may be an unstructured data storage function (unstructured data storage network function, UDSF).

A charging network element is mainly configured to perform a charging function. In a 5G communication system, the charging network element may be a charging (Charging Function, CHF) network element.

An edge security network element is mainly configured for communication between different operator networks. As a border gateway of different operator networks, the edge security network element is responsible for performing message filtering and policy management on a control plane interface between operators. In a 5G communication system, the edge security network element may be a security edge protection proxy (security edge protection proxies, SEPP).

A service communication proxy network element is configured to support indirect communication and discovery of a proxy network function. In a 5G communication system, the service communication agent network element may include a service communication proxy (service communication proxy, SCP).

A network exposure network element may be a network exposure function (network element function, NEF) network element in a 5G communication system, is mainly configured to expose a service and a capability of a 3GPP network function to an AF, and may also enable the AF to provide information for the 3GPP network function.

A network slice selection function network element is responsible for selecting a network slice for UE. In a 5G communication system, the application network element may be a network slice selection function (network slice selection function, NSSF) network element.

In a future communication system, for example, a 6th (6th generation, 6G) communication system, the foregoing network element or device may still use a name of the network element or device in the 5G communication system, or may have another name. This is not limited in embodiments of this application. The function of the network element or device may be implemented by one independent network element, or may be jointly implemented by several network elements. During actual deployment, network elements in a core network may be deployed on a same physical device or different physical devices. For example, in a possible deployment, an AMF and an SMF may be deployed on a same physical device. For another example, a network element of a 5G core network and a network element of a 4th generation (4th generation, 4G) core network may be deployed on a same physical device. This is not limited in embodiments of this application.

In a 5G communication system, the application network element may be an application function (application function, AF) network element. In a future communication system, the application network element may still be the AF network element, or may have another name. This is not limited in this application.

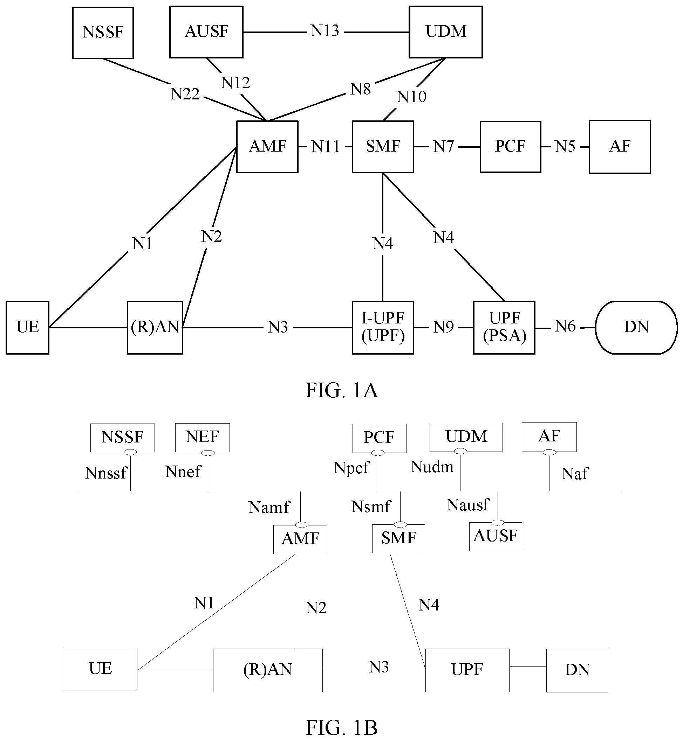

FIG. 1A and FIG. 1B are diagrams of a 5th generation (5th generation, 5G) network architecture. FIG. 1A is a diagram of a 5G network architecture in a non-service-based architecture, and FIG. 1B is a diagram of a 5G network architecture in a service-based architecture (service-based architecture, SBA). The service-based architecture is a basic architecture of a 5G network. "Service-based" is mainly implemented on a control plane. The essence of the SBA is to define network functions as several "service" modules that can be flexibly invoked according to three principles of "self-contained, reusability, and independent management". Based on this, an operator can flexibly customize networking based on a service requirement. Interaction between the network functions is implemented through service invoking. Each network function externally presents a common service-based interface, which can be invoked by an authorized network function or service. FIG. 1B is a diagram of an example of a service-based architecture of a 5G network. In the architecture, a core network element may communicate with another core network element through a service-based interface. For example, a service-based interface corresponding to an AMF is referred to as a Namf interface, and an interface corresponding to an LMF may be referred to as an Nlmf interface.

The 5G network architectures shown in FIG. 1A and FIG. 1B each may include three parts: a terminal, a DN, and an operator network. The following briefly describes functions of some network elements in the 5G network architecture.

The operator network may include but is not limited to one or more of the following network elements: an AUSF, a PCF, a UDM, an AF, an AMF, an SMF network element, a (R)AN device, a UPF, an NSSF, and the like. In the operator network, a network element or device other than the radio access network device may be referred to as a core network element or a core network device.

In addition, some communication interfaces shown in FIG. 1A include the following interfaces.

An N1 interface is a signaling plane interface between the AMF and UE, and is configured to exchange a signaling message between a core network and the UE. For example, the UE is registered with a network, the UE establishes a protocol data unit (protocol data unit, PDU) session, and a network side configures a policy for the UE.

An N2 interface is an interface between the AMF and the (R)AN, and is configured to transfer radio bearer control information and the like from the core network to the (R)AN.

An N3 interface is an interface between the (R)AN and the UPF, and is configured to transfer service data of the UE between the (R)AN and the UPF.

An N4 interface is an interface between the SMF and the UPF, and is configured to transfer information between a control plane and a user plane, including that a control plane terminal device completes a network access operation based on subscription information of an operator.

An N6 interface is an interface between the UPF and the DN, and is configured to transfer service data of the UE between the UPF and the DN.

An N5 interface is an interface between the PCF and the AF.

An N7 interface is an interface between the PCF and the SMF, and is configured to deliver PDU session granularity and service data flow granularity control policies.

An N8 interface is an interface between the AMF and the UDM, and is used by the AMF to obtain access and mobility management-related subscription data and authentication data from the UDM, and used by the AMF to register current mobility management-related information of the UE with the UDM.

An N9 interface is an interface between two UPFs. For example, as shown in FIG. 1A, the N9 interface is an interface between an intermediate UPF (intermediate UPF, I-UPF) and a UPF used as a PDU session anchor (PDU session anchor, PSA).

An N10 interface is an interface between the SMF and the UDM, and is used by the SMF to obtain session management-related subscription data from the UDM, and used by the SMF to register current session-related information of the UE with the UDM.

An N11 interface is an interface between the SMF and the AMF, and is configured to transfer PDU session tunnel information between the (R)AN and the UPF, a control message sent to the UE, radio resource control information sent to the (R)AN, and the like.

An N12 interface includes an interface between the AMF and the AUSF.

An N13 interface includes an interface between the AUSF and the UDM.

An N22 interface includes an interface between the NSSF and the AMF.

It may be understood that the foregoing network element or function may be a network element in a hardware device, may be software functions running on dedicated hardware, or may be virtualized functions instantiated on a platform (for example, a cloud platform). Optionally, the foregoing network element or function may be implemented by one device, may be jointly implemented by a plurality of devices, or may be implemented by one function module in one device. This is not specifically limited in embodiments of this application.

The session management network element, the user plane network element, and the mobility management network element in this application may be respectively the SMF, the UPF, and the AMF in FIG. 1A, or may be network elements that have functions of the SMF, the UPF, and the AMF in future communication, for example, a 6G network. This is not limited in this application. In embodiments of this application, an example in which the SMF, the UPF, and the AMF are respectively used as the session management network element, the user plane network element, and the mobility management network element is used for description.

It should be noted that names of the network elements and the interfaces between the network elements in FIG. 1A and/or FIG. 1B are merely examples. In specific implementation, the names of the network elements and the interfaces between the network elements may be others. This is not specifically limited in embodiments of this application.

In previous generations of mobile communication technologies, for example, a 3rd generation (3rd generation, 3G) mobile communication technology and a 4G mobile communication technology, it is difficult to promote a multicast/broadcast solution. Specifically, in an existing multicast/broadcast solution, a dedicated network element and interface that support multicast/broadcast need to be added based on an existing communication architecture, and a dedicated multicast/broadcast channel is further required for support. This not only increases overheads of operators, but also increases complexity of terminals.

To overcome the foregoing difficulties, how to support a multicast/broadcast function (5G Multicast/Broadcast Service, SMBS) on the basis of a 5th generation mobile communication network architecture becomes a key research topic.

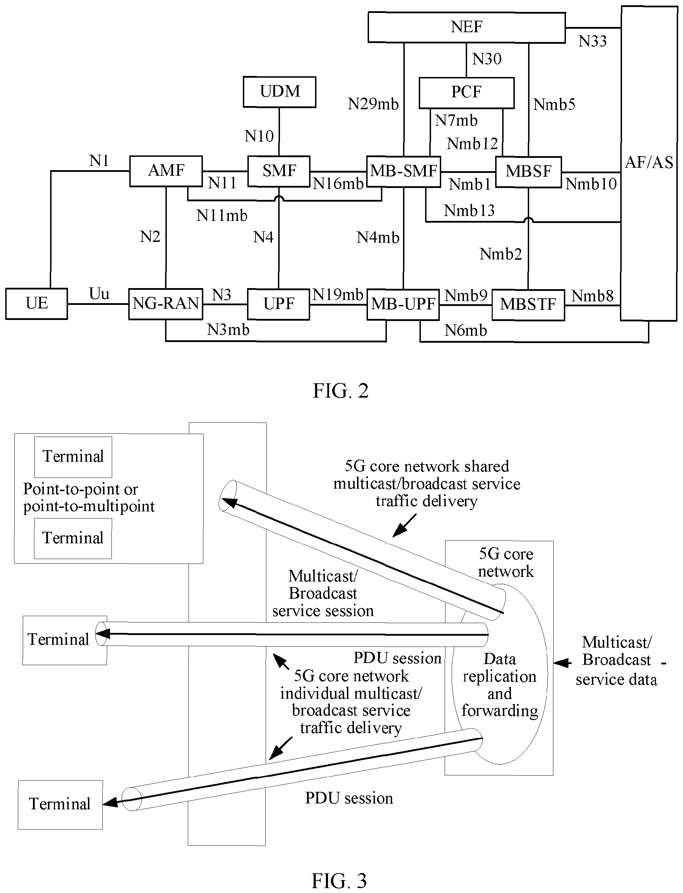

FIG. 2 is an architecture used in a current latest 5G multicast/broadcast technical specification, and provides a network architecture used to support a multicast/broadcast service. The architecture is extended based on the architecture shown in FIG. 1A. For example, two functional entities, a multicast/broadcast session management function (Multicast/Broadcast Session Management Function, MB-SMF) network element and a multicast/broadcast user plane function (Multicast/Broadcast User Plane Function, MB-UPF) network element, are added to support a multicast/broadcast service/function.

The MB-SMF may implement a control plane function of a multicast/broadcast service, and is responsible for management of a multicast/broadcast service/group/session. From a perspective of a control plane, the MB-SMF may be connected to an NEF and/or a multicast/broadcast service function (Multicast/Broadcast Service Function, MBSF), for example, configured to receive information related to a multicast/broadcast service (for example, description of the multicast/broadcast service). In addition, the MB-SMF may be further connected to a PCF, for example, may extract a PCC rule related to the multicast/broadcast service. From a perspective of a user plane, the MB-UPF may be connected to a multicast/broadcast service transport function (Multicast/Broadcast Service Transport Function, MBSTF) and/or an AF/AS, and is configured to receive service data of a multicast/broadcast service. It should be noted that the MB-SMF and the SMF may be co-deployed or separately deployed, and the MB-UPF and the UPF may be co-deployed or separately deployed. This is not limited in this application.

It should be noted that the foregoing name of the MB-SMF or the MB-UPF is an example. In a 5G network, the MB-SMF or the MB-UPF may have another name. This is not limited in this application.

The following explains a definition of how the access network device supports the multicast/broadcast function.

As shown in FIG. 3, that the access network device supports the multicast/broadcast function may be understood as that the access network device supports in transmitting multicast/broadcast service data in a 5G core network shared multicast/broadcast service traffic delivery (5GC shared MBS traffic delivery) manner. That the access network device does not support the multicast/broadcast function may be understood as that the access network device does not support in transmitting multicast/broadcast service data in a 5G core network shared multicast/broadcast service traffic delivery manner, that is, only support in transmitting the multicast/broadcast service data in a 5G core network individual multicast/broadcast service traffic delivery (5GC Individual MBS traffic delivery) manner. It should be understood that, after arriving at the access network device (for example, RAN), the multicast/broadcast service data is processed by a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer of the RAN, and then is sent to all UEs that receive the multicast/broadcast service data.

Currently, in a release-17 (Release-17, R17) phase of the 5MBS research subject, a group member is supported to receive multicast service data only in an RRC-connected (RRC-connected) mode. In addition, the 5MBS research subject proposes, in a release-18 phase, a requirement for supporting a group member in receiving a multicast service in an RRC-inactive state.

However, currently, when the UE is in the RRC-inactive state, a radio access network device cannot effectively manage a multicast/broadcast session, and network resource utilization is reduced. It should be understood that processes of managing the multicast/broadcast session in this application may include processes such as establishment, release, and update of the multicast/broadcast session. The session establishment and release processes are mainly described herein, but it should not be understood that the processes of managing the multicast/broadcast session include only establishment and release of the multicast/broadcast session.

For the procedure of managing the multicast/broadcast session (MBS session management) of 5MBS R17, the following problems still exist.

Currently, a multicast/broadcast session tunnel corresponding to the multicast/broadcast session (MBS session) of 5MBS R17 is at a granularity of a base station and a service (service). Establishment of the multicast/broadcast session tunnel is triggered by UE that first arrives under the base station and joins the multicast/broadcast service, and release of the multicast/broadcast session tunnel is caused because last UE that joins the multicast/broadcast service under the base station leaves a multicast group. In this application, the multicast/broadcast group is a UE group including UEs that are under a same base station and that join the multicast/broadcast service.

In 5MBS R17, the UE needs to perform receiving in the RRC-connected mode (CM-connected) (referred to as a connected mode for short below). There is a UE-granularity RRC connection between the UE in the connected mode and the base station, and there is a UE-granularity N2 connection between the UE and the base station. Therefore, the base station may perceive whether the UE receives the multicast/broadcast service data in a coverage area of the base station. In other words, the base station may perceive, based on whether there is a UE-granularity RRC message, whether the UE moves out of the coverage area of the base station.

However, for the UE in the RRC-inactive state, an RRC connection between the UE and the base station is deactivated, and the base station cannot determine, based on whether there is the RRC connection, whether the UE moves out of the coverage area of the base station. Therefore, when the UE moves in a radio access network notification area (RAN notification area, RNA), the base station cannot accurately perceive movement even if the UE moves out of the coverage area of the base station. As a result, the base station cannot accurately determine an accurate occasion for establishing and releasing the multicast/broadcast session, and therefore cannot effectively establish and release the multicast session. This causes a decrease in network resource utilization. In addition, in another existing contention solution, if the UE in the RRC-inactive state joins the multicast/broadcast service, the RNA needs to be set to a granularity of the coverage area of the base station. This limits an application of the RNA.

In the following, some terms in this application are described, to help a person skilled in the art have a better understanding. It should be noted that these explanations are not intended to limit the protection scope claimed in this application.

### 1. Unicast

Unicast may be understood as "point-to-point" (point to point, PTP) communication. At a service layer, a unicast service means that data of the service is sent to a single terminal device. At a core network service layer, unicast means that the service data is sent to a terminal device through a PDU session. Between network elements (or devices), unicast means that there is a unicast tunnel between a source network element and a target network element (that is, an IP address of the target network element is a unicast IP address). For an air interface, an air interface unicast mode (or referred to as a point-to-point mode) means that an access network device sends the service data to the single terminal device. It may be understood as that the access network device sends the service data to the single terminal device by using a radio bearer in the air interface unicast mode.

### 2. Multicast/Broadcast

Multicast/Broadcast refers to multicast (multicast) (or referred to as groupcast) or broadcast (broadcast), and may be understood as "point-to-multipoint" (point to multi-point, PTM) communication. At a service layer, a multicast/broadcast service means that data of the service is sent to a plurality of terminal devices. At a core network service layer, the multicast/broadcast service means that the service data of the multicast/broadcast service is sent to the terminal device through a multicast/broadcast session. Between network elements, multicast means that there is a multicast tunnel between a source network element and a target network element (that is, an IP address of the target network element is a multicast IP address). For an air interface, an air interface multicast/broadcast mode means that one piece of service data sent by an access network device may be received by the plurality of terminal devices at the same time and/or at a same frequency. In other words, embodiments in this application may be applied to both multicast service transmission and broadcast service transmission.

It should be understood that, when "multicast" in this application appears alone and does not appear in a form of "multicast/broadcast", as an example of a transmission mode, "multicast" may be replaced with "multicast/broadcast".

### 3. Multicast/Broadcast session and multicast/broadcast session tunnel

A multicast/broadcast session includes a unicast tunnel between network elements, a multicast tunnel, an air interface radio bearer in unicast mode, or an air interface radio bearer in multicast/broadcast mode. It should be noted that the multicast/broadcast session may be used to send multicast service data (sends multicast/broadcast service data) to a terminal device, or may be used to send broadcast service data to the terminal device. This is not limited in this embodiment of this application. It should be understood that "send multicast service data" may also be replaced with "send multicast/broadcast data (sends multicast/broadcast data)" or "send a multicast/broadcast service (sends multicast/broadcast service)".

A multicast session is used as an example. A current data sending mechanism of the multicast session may be understood as follows: A piece of data arrives at a base station through a tunnel of a service granularity, and the base station sends, in a point-to-multipoint manner by using a multicast radio bearer (multicast radio bearer), the data to one or more terminal devices that join the multicast session.

A multicast/broadcast session tunnel related to a multicast service may be established between an access network device and a core network device. Multicast/Broadcast service data is transmitted in the multicast/broadcast session tunnel. The multicast/broadcast service data received by the access network device through the multicast/broadcast session tunnel may be sent to a plurality of terminal devices that join the multicast/broadcast service. The multicast/broadcast service data in the multicast/broadcast session tunnel may be transmitted in a form of a multicast/broadcast quality of service (quality of service, QoS) flow. Specifically, the multicast/broadcast service may be transmitted in the multicast/broadcast session tunnel in a manner of one or more multicast/broadcast QoS flows.

It should be understood that the multicast/broadcast session tunnel may one-to-one correspond to the multicast/broadcast service, that is, one multicast/broadcast service corresponds to one multicast/broadcast session tunnel (Per MB service). One multicast/broadcast service may include one or more multicast/broadcast service flows, a plurality of multicast/broadcast service flows may correspond to one or more multicast/broadcast QoS flows, and one multicast/broadcast session may include one or more multicast/broadcast QoS flows.

In other words, the multicast/broadcast session is at a granularity of a service rather than at a granularity of a terminal device, and at least one terminal device may receive data of the multicast/broadcast service through the session. In other words, the multicast/broadcast session may support a plurality of terminal devices in sharing the session.

In addition, the multicast/broadcast session or the multicast/broadcast session tunnel in this application may be considered as 5G core network shared multicast/broadcast service traffic delivery. Therefore, the multicast/broadcast session or the multicast/broadcast session tunnel may be replaced with 5G core network shared multicast/broadcast service traffic delivery. 5G core network shared multicast/broadcast service traffic delivery may also be referred to as shared delivery (shared delivery) for short. In a possible implementation, the multicast/broadcast session tunnel may be a GTP-U tunnel shared by a plurality of terminal devices in the multicast group.

### 4. Multicast/Broadcast service

A multicast/broadcast service may be described by using information about the multicast/broadcast service. The information about the multicast/broadcast service includes at least description information of the multicast/broadcast service. The description information of the multicast/broadcast service may include description information of one or more multicast/broadcast service flows. The description information about the multicast/broadcast service flow includes at least one of the following: a quality of service index (QoS flow identifier, QFI) that the multicast/broadcast service flow needs to have, feature information of the multicast/broadcast service flow (such as a destination address, a target port number, or a source address of the multicast/broadcast service flow), and a QoS requirement (such as jitter, a delay, a packet loss rate, or a bandwidth) of the multicast/broadcast service flow. The QoS requirement of the multicast/broadcast service flow is for establishing a multicast/broadcast QoS flow. In addition to including the description information of the multicast/broadcast service, the information about the multicast/broadcast service may further include information about a terminal device, for example, may include an identifier of one or more terminal devices that are allowed (or requested) to join the multicast/broadcast service, an identifier of a terminal device group, and the like.

It should be understood that the multicast/broadcast service in this application may be replaced with a service of a multicast/broadcast session parameter, or may be replaced with a multicast/broadcast session.

### 5. PDU session and PDU session tunnel

A PDU session tunnel corresponds to UE, and service data in the PDU session tunnel may be transmitted in a form of a unicast QoS flow. In this application, the PDU session tunnel may be further used to transmit a unicast QoS flow to which a multicast/broadcast QoS flow corresponding to a multicast/broadcast service is mapped.

It should be noted that the PDU session is at a UE level, and the multicast/broadcast session is at a service level. One PDU session of one UE may be associated with a plurality of multicast/broadcast services. In other words, the UE may join at least one multicast/broadcast service through the PDU session. One multicast/broadcast session may serve one multicast/broadcast service. One multicast/broadcast session includes a unicast tunnel or a multicast tunnel from a data network to a core network device and then to an access network device, and a unicast air interface resource or a multicast/broadcast air interface resource that is allocated by the access network device and that is used to send the multicast/broadcast service.

The foregoing describes some terms involved in this application, and the following describes technical features involved in this application. It should be noted that these explanations are either not intended to limit the protection scope claimed in this application.

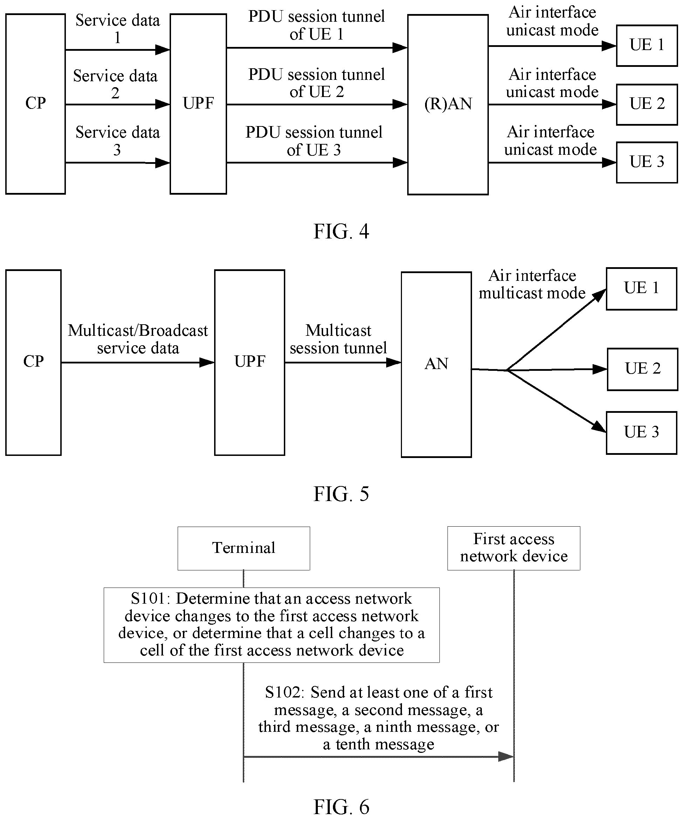

FIG. 4 is a diagram of an example of transmitting data in unicast mode. A transmission procedure shown in FIG. 4 may be used to transmit both unicast service data and multicast/broadcast service data.

In FIG. 4, each of UE 1, UE 2, and UE 3 corresponds to a different PDU session. A service provider (CP/SP) may separately send respective service data to the UE 1, the UE 2, and the UE 3 through three PDU sessions. It should be understood that service data of three UEs is different, a target address may be an IP address of each UE, and the service data of each UE may be separately sent to each UE through an independent transmission path of each UE. Specifically, a service transmission path from the CP/SP to a RAN may include a transmission path between the CP/SP and a UPF and a transmission path between the UPF and the RAN. The transmission path between the UPF and the RAN may be referred to as a PDU session tunnel, and different PDU sessions have different PDU session tunnels. On an air interface, the RAN may separately send the service data to the UE 1, the UE 2, and the UE 3 in unicast mode, that is, in PTP mode.

FIG. 5 is a diagram of an example of transmitting data in multicast/broadcast mode. A transmission procedure shown in FIG. 5 may be used to transmit multicast/broadcast service data.

In FIG. 5, the multicast/broadcast service data may be sent from a CP/SP to UE 1, UE 2, and UE 3. A multicast/broadcast service transmission path from the CP/SP to a RAN may include a transmission path between the CP and a UPF and a transmission path between the UPF and the RAN. The transmission path between the UPF and the RAN may be used for transmitting the multicast/broadcast service data through a tunnel, for example, through a tunnel according to a general tunnel protocol (general tunnel protocol, GTP). The transmission path between the UPF and the RAN may be referred to as a multicast/broadcast session tunnel, and the multicast/broadcast session tunnel is shared by the UE 1, the UE 2, and the UE 3. On an air interface, the RAN may send the multicast/broadcast service data to the UE 1, the UE 2, and the UE 3 in PTM mode. In other words, the RAN needs to send only one piece of data, and all the UE 1, the UE 2, and the UE 3 may receive the piece of data.

In multicast mode, service data may be transmitted to all target nodes at a time, or service data may be transmitted only to a specific object. Therefore, in multicast mode, point to multipoint transmission may be implemented between one sending node and a plurality of receiving nodes, thereby resolving a problem of low efficiency of the unicast mode.

The foregoing provides related descriptions of unicast and multicast/broadcast. It may be understood that, that an access network device supports a multicast/broadcast function may be understood as that the access network device supports in transmitting the multicast/broadcast service data in multicast/broadcast mode. Alternatively, that an access network device does not support a multicast/broadcast function may be understood as that the access network device does not support in transmitting the multicast/broadcast service data in multicast/broadcast mode, or the access network device supports in transmitting the multicast/broadcast service data or PDU session data only in unicast mode. The access network device that does not support the multicast/broadcast function may send a multicast/broadcast service to a terminal device through a PDU session, that is, map the multicast/broadcast service to the PDU session. The access network device that supports the multicast/broadcast function may receive multicast/broadcast service data from a core network through the multicast/broadcast session tunnel, and send the multicast/broadcast service data to a plurality of terminal devices that join the multicast/broadcast service. It should be understood that, after arriving at the RAN, the multicast/broadcast service data is processed by a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer of the RAN, and then is sent to all UEs that receive the multicast/broadcast service data.

To effectively manage the multicast/broadcast session when the UE in the RRC-inactive state joins the multicast/broadcast service, to improve network resource utilization, an embodiment of this application provides a communication method. The communication method may be implemented by user equipment (or a component configured to implement a function of the user equipment, such as a chip, a processor, or a communication module) and a (R)AN device (or a component configured to implement a function of the user equipment, such as a chip, a processor, or a communication module). In this application, an example in which the user equipment is UE and the (R)AN device is a base station is used to describe the communication method. It may be understood that the communication method may alternatively be implemented by another type of user equipment and/or a (R)AN device in this application. In other words, the UE in this application may be replaced with a terminal device (or user equipment), and the base station may be replaced with an access network device or a (R)AN device.

As shown in FIG. 6, a communication method provided in an embodiment of this application may include the following steps.

S101: A terminal determines that an access network device changes to a first access network device, or determines that a cell changes to a cell of the first access network device.

For example, the terminal is UE and the first access network device is a first base station. The UE determines that a base station changes to the first base station, or determines that a cell changes to a cell of the first base station. The UE has joined (joined) a first multicast/broadcast service and is in an RRC-inactive state.

The UE has joined (joined) the first multicast/broadcast service and is in the radio resource control inactive (RRC-inactive) state. Alternatively, the UE has joined the first multicast/broadcast service and is allowed to receive (allowed to receive) a multicast/broadcast service, receive multicast/broadcast, or receive multicast/broadcast data in the RRC-inactive state. It should be noted that in this application, "has joined a first multicast/broadcast service" may be replaced with "has joined a first multicast/broadcast session". In addition, the multicast/broadcast session may be used to transmit the multicast/broadcast service.

In S101, the base station is a base station accessed by the UE, and the base station may also be referred to as a base station on which the UE is camped (camped), or may be referred to as a base station served by the UE. In S101, "the UE determines that a base station changes to the first base station" may also be replaced with "the UE determines/finds that a base station changes (or hands over), and a changed base station is the first base station". In this application, that the UE accesses the base station may mean that the UE is located in a coverage area of the base station; may mean that the UE is located in a coverage area of the base station and the UE is connected to the base station; or may mean that the UE is located in a coverage area of the base station and the UE exchanges a message with the base station.

Similarly, in S101, the cell is a cell accessed by the UE, and the cell may also be referred to as a cell of the UE or a cell on which the UE is camped (camped). In S101, "the UE determines that a cell changes to a cell of the first base station" may also be replaced with "the UE determines/finds that a cell changes (or hands over), and a changed cell is a cell of the first base station". That the cell changes may include: The UE is changed from one cell of the first base station to another cell of the first base station, or changed from a cell of another base station to one cell of the first base station. In this application, that the UE accesses the cell or the UE camps on the cell may mean that the UE is located in a coverage area of the cell and the UE establishes a connection to the cell; or may mean that the UE may select a frequency/frequency/frequency band supported by the cell.

In a possible implementation of S101, the UE may receive first information, and determine, based on the first information, that the base station changes to the first base station, or determine, based on the first information, that the cell changes to the cell of the first base station.

Optionally, the first information may include an identifier of the first base station and/or an identifier of the cell of the first base station. Therefore, the UE may compare the identifier of the first base station with an identifier that is of the base station and that is previously received (which may refer to before receiving the first information), to identify whether the base station changes; and/or the UE may compare, based on the identifier of the cell of the first base station with an identifier that is of the cell and that is previously received (which may refer to before receiving the first information), to identify whether the cell changes.

The identifier of the base station and/or the identifier of the cell that are/is previously received by the UE may be carried in information (which may be referred to as third information in this application) received by the UE before the UE receives the first information. A manner of sending and receiving the third information may be similar to a manner of sending and receiving the first information. A difference lies in that the third information may come from the first base station or may come from another base station. In this application, both the first information and the third information may be referred to as information used to carry the identifier of the base station and/or the identifier of the cell. If the UE receives the third information and receives the first information at a same location or in service area (which may refer to signal coverage areas of the base station and the cell herein), the first information and the third information may carry an identifier of a same base station and an identifier of a same cell. In other words, both the first information and the third information carry the identifier of the first base station and/or the identifier of the cell of the first base station. In addition, if the UE receives the third information and receives the first information at different locations or in service areas (which may refer to any one of coverage areas of the base station and the cell herein), the first information and the third information may carry identifiers of different base stations and/or identifiers of different cells. In other words, in this case, the identifier of the base station carried in the third information may be an identifier of a base station other than the first base station, and/or the identifier of the cell carried in the third information may be different from the identifier of the cell of the first base station in the first information.

Optionally, the third information may be information that is received by the UE before receiving the first information and that is used to carry the identifier of the base station and/or the identifier of the cell. It may be understood that, if the identifier of the base station included in the third information is an identifier of a second base station, regardless of whether the identifier of the cell in the first information is the same as the identifier of the cell in the third information, the UE may determine, based on the identifier of the second base station and the identifier of the first base station, that the base station changes from the second base station to the first base station. In other words, the UE may determine that the base station changes. If the identifier of the base station included in the third information is the same as the identifier of the first base station included in the first information, but the identifier of the cell carried in the third information is different from the identifier of the cell carried in the first information, the UE may determine, based on the identifiers of the two cells, that the cell changes from one cell of the first base station to another cell of the first base station. In other words, only the cell changes but the base station does not change.

In another possible implementation, if the base station on which the UE is camped changes from the second base station to the first base station, the UE may further receive area indication information or area information from the second base station, and the UE determines, based on the area indication information or the area information, to move out of a coverage area/service area of the second base station or a coverage area/service area of a cell of the second base station. For example, the area indication information or the area information may include access network notification area information (RAN-NotificationArealnfo), and the access network notification area information may include at least one of the following: a cell identifier (cell ID), a cell list (cell list), an area configuration list (ran-AreaConfigList), a tracking area code (tracking area code), an access network area code (RAN-AreaCode), and a public land mobile network identity (public land mobile network ID, PLMN ID). The area indication information or the area information that may be received by the UE from the second base station is a first area. When the UE determines to move out of the first area, the UE may determine that the base station/cell changes. For example, the first area may be an access network notification area, and the first area may include the cell identifier included in the second base station, may include the identifier of the second base station, may include the cell list of the second base station, may include the tracking area code of the second base station, or may include the access network area code of the second base station. Optionally, if the UE further determines, based on the first area, that the changed base station is the first base station, the UE may determine that the base station changes from the second base station to the first base station.

The following uses the first information as an example to describe a sending manner and a receiving manner of the information used to carry the identifier of the base station and the identifier of the cell in embodiments of this application. The third information may be implemented with reference with the foregoing manners.

It may be understood that the first information may be sent by the first base station. When the UE is located in a coverage area of the cell of the first base station, the UE may receive the first information to identify whether the base station changes and/or the cell changes.

In a possible implementation, the first information may be carried in a system message, and the system message may be sent on a broadcast control channel (broadcast control channel, BCH). For example, the first information is carried in a system information block (system information block, SIB) sent by the cell of the first base station, for example, carried in an SIB 1. It should be understood that the SIB1 may be used to carry information or a parameter for the UE to access the base station or the cell. For example, the first information may include a cell global identity (cell global identity, CGI) in the SIB1.

In another implementation, the first information may be carried in a non-UE granularity message, for example, a message sent on a non-UE granularity message multicast control channel, or a message sent on a multicast channel. For example, the first information may be carried on a multicast control channel (multicast control channel, MCCH) or a multicast channel (multicast channel, MCH). In this application, the MCCH or the MCH may be used to carry information related to a non-UE granularity multicast/broadcast service, for example, configuration information used to receive the multicast/broadcast service.

In another implementation, the first information may be carried in an RRC message. For example, the RRC message may be an RRC reestablishment (RRCReestablishment) message, or may be an RRC reconfiguration (RRCReconfiguration) message.

In another implementation, the first information may be carried in a paging message, and the paging message may be sent on a paging channel. For example, the first information is carried in a group paging message of the multicast/broadcast service. Alternatively, for example, the first information is carried in a paging message for the UE.

Optionally, in addition to sending the first information, the first base station in this application may further send second information. The second information may be used by the UE to read the identifier of the first base station and/or the identifier of the cell of the first base station from the first information. Because in the first information, a quantity of digits (digits), a quantity of bits (bit) (bits), or a quantity of bytes (octet/byte) (octets/bytes), a quantity of hexadecimals (hexadecimals), or a quantity of decimals (decimals) occupied by the identifier of the first base station and/or a quantity of digits (digits), a quantity of bits (bit) (bits), or a quantity of bytes (octet/byte) (octets/bytes), a quantity of hexadecimals (hexadecimals), or a quantity of decimals (decimals) occupied by the identifier of the cell of the first base station, and a coding scheme of the identifier of the first base station and/or a coding scheme of the cell of the first base station may be unknown to the UE in the RRC-inactive state, the UE may need to read the identifier of the first base station and/or the identifier of the cell of the first base station with assistance of the second information. That the first information is the CGI is used as an example. For different countries or different mobile network operators, a quantity of digits (digit/digits) occupied by the identifier of the base station and a quantity of digits occupied by the identifier of the cell included in the CGI are different. Therefore, the UE needs to learn, through the second information, a manner of reading the identifier of the first base station and/or the identifier of the cell of the first base station from the first information, to correctly identify the identifier of the first base station and/or the identifier of the cell of the first base station.

In a possible example, the second information may indicate a quantity of digits, bits or a quantity of bits, bytes or a quantity of bytes, a quantity of decimals, or a quantity of hexadecimals occupied by the identifier of the first base station in the first information, and/or the second information may indicate a quantity of digits, bits or a quantity of bits, bytes or a quantity of bytes, a quantity of decimals, or a quantity of hexadecimals of the identifier occupied by the identifier of the cell of the first base station in the first information.

If the second information indicates the quantity of digits occupied by the identifier of the first base station, for example, indicates that the identifier of the first base station occupies bits 0 to 6 in the first information, and/or indicates the quantity of digits occupied by the identifier of the cell of the first base station, for example, indicates that the identifier of the first base station occupies bits 7 to 10 in the first information, the UE may learn the quantity of digits occupied by the identifier of the first base station and/or the quantity of digits of the identifier of the cell of the first base station in the first information based on the second information.

Further, the second information further indicates a coding scheme of the identifier of the first base station and/or a coding scheme of the identifier of the first cell in the first information, for example, binary, octal, decimal, or hexadecimal. For example, if the coding scheme included in the second information indicates that binary coding is used, for example, when the identifier of the first base station in the first information occupies bits 0 to 6, a value of the identifier may be 010101. For another example, if the coding scheme included in the second information indicates that octal coding is used, for example, when the identifier of the first base station in the first information occupies bits 0 to 6, a value of the identifier may be 276510. For another example, if the coding scheme included in the second information indicates that decimal coding is used, for example, when the identifier of the first base station in the first information occupies bits 0 to 6, a value of the identifier may be 123459. For another example, if the coding scheme included in the second information indicates that hexadecimal coding is used, for example, when the identifier of the first base station in the first information occupies bits 0 to 6, a value of the identifier may be 9ABC23. Therefore, if the UE knows a bit length occupied by the identifier of the first base station and/or a bit length occupied by the identifier of the cell of the first base station in the first information, and further knows the coding scheme of the identifier of the base station and/or the coding scheme of the identifier of the cell, the UE may read the identifier of the first base station and the identifier of the cell of the first base station from the first information.

It should be understood that, in this application, it is not excluded that the second information may indicate the quantity of digits occupied by the identifier of the first base station (and/or the identifier of the cell of the first base station) and/or the coding scheme. The UE determines, based on a known length of the first information and/or the quantity of digits occupied by the identifier of the first base station (or the identifier of the cell of the first base station), the quantity of digits occupied by the identifier of the cell of the first base station (or the identifier of the first base station). For example, the UE knows that the length of the first information is 10 bits, and the second information may indicate the quantity of digits occupied by the identifier of the first base station. In this case, a quantity of remaining digits in the 10 bits is the quantity of digits occupied by the cell of the first base station.

Based on this example, the UE may accurately read the identifier of the first base station based on the quantity of digits, the bits, the quantity of bits, the bytes, or the quantity of bytes occupied by the identifier of the first base station in the first information, and/or the UE may accurately read the identifier of the cell of the first base station in the first information based on the quantity of digits, the bits, the quantity of bits, the bytes, or the quantity of bytes occupied by the identifier of the cell of the first base station.

Optionally, when the second information indicates the quantity of bytes of the identifier of the first base station, X may be indicated, to indicate that the identifier of the first base station includes X bytes (consist of X octets/bytes).

In another example, the second information may indicate a coding scheme of the identifier of the first base station in the first information, and/or the second information may indicate a coding scheme of the identifier of the cell of the first base station in the first information. For example, if the coding scheme of the identifier of the first base station is a first coding scheme, the coding scheme of the identifier of the cell of the first base station is a second coding scheme, and the first coding scheme may be the same as or different from the second coding scheme, the UE may decode the identifier of the base station in the first information according to the first coding scheme. If some bits or bytes in the first information can be successfully decoded, the some bits or bytes are the identifier of the first base station. Similarly, the UE may decode the identifier of the cell in the first information according to the second coding scheme. If some bits or bytes in the first information can be successfully decoded, the some bits or bytes are the identifier of the cell of the first base station.

It should be understood that the second information may alternatively be obtained by the UE from a channel other than the first base station. For example, the UE may obtain the second information from a server (for example, a third-party server, an application server, or an AF). Alternatively, the UE may obtain the second information from the initial configuration information of an operator. Alternatively, the UE may obtain the second information from itself, for example, read the second information from factory configuration information or other local configuration information. Alternatively, the UE may obtain the second information from an access network device (for example, the first base station or another base station). Alternatively, the UE may obtain the second information from a core network element. For example, the core network element may include at least one of an SMF, a UPF, an AMF, an NWDAF, a PCF, a UDM, a UDR, an NEF, an MB-SMF, an MB-UPF, an MBSTF, an MBSF, an NRF, an AUSF, a UDSF, an NSSF, a CHF, an SEPP, a trusted non-3 GPP gateway function (trusted non-3 GPP gateway function, TNGF), an SCP, or an AF.

For example, before S101, the UE may obtain the second information through receiving or from local configuration information (for example, the initial configuration information of the operator and/or the factory configuration information). An RRC connection state in which the UE obtains the second information is not limited in this application. For example, the second information may be received by the UE in a connected mode. For example, the UE may receive the second information from a base station (including but not limited to the first base station) in a registration process. Alternatively, the second information may be received after the UE enters the RRC-inactive state, or the second information may be received by the UE in an idle state. For example, the second information may be included in an SIB message, a message of an MCCH channel, an RRC message, a paging message, or a message sent on an MCH. This is not specifically required in this application.

It should be understood that, in this application, the UE may interpret the identifier of the base station and/or the identifier of the cell in the third information in an implementation similar to that for interpreting the first information. If the quantity of digits, the bits, the quantity of bits, the bytes, or the quantity of bytes occupied by the identifier of the first base station in the first information is/are the same as a quantity of digits, bits, a quantity of bits, bytes, or a quantity of bytes occupied by the identifier of the base station in the third information, and coding schemes are the same, the UE may read the identifier of the corresponding base station in the first information and the identifier of the base station in the third information through the second information. If the quantity of digits, the bits, the quantity of bits, the bytes, or the quantity of bytes occupied by the identifier of the first base station in the first information is/are the same as a quantity of digits, bits, a quantity of bits, bytes, or a quantity of bytes occupied by the identifier of the base station in the third information, and coding schemes are different, the UE may read the identifier of the base station in the third information through a fourth information. For a setting manner (for example, content and a usage manner that are indicated by the information) of the fourth information and a manner (or referred to as an obtaining manner, including a location of carrying the information) of obtaining the fourth information by the UE, refer to the setting manner and the obtaining manner of the second information. For example, the fourth information may indicate the quantity of digits, the bits, the quantity of bits, the bytes, or the quantity of bytes occupied by the identifier of the base station in the third information, and the coding scheme. For another example, the UE may obtain the third information from a base station to which the identifier of the base station included in the third information belongs or from another channel.

Similarly, if the quantity of digits, the bits, the quantity of bits, the bytes, or the quantity of bytes occupied by the identifier of the cell of the first base station in the first information is/are the same as a quantity of digits, bits, a quantity of bits, bytes, or a quantity of bytes occupied by the identifier of the cell in the third information, and coding schemes are the same, the UE may read the identifier of the cell of the first base station in the first information and the identifier of the cell in the third information through the second information. If the quantity of digits, the bits, the quantity of bits, the bytes, or the quantity of bytes occupied by the identifier of the cell of the first base station in the first information is/are the same as a quantity of digits, bits, a quantity of bits, bytes, or a quantity of bytes occupied by the identifier of the cell in the third information, and coding schemes are different, the UE may read the identifier of the cell in the third information through a fifth information. For a manner of setting the fifth information and a manner of obtaining the fifth information by the UE, refer to the second information. For example, the fifth information may indicate the quantity of digits, the bits, the quantity of bits, the bytes, or the quantity of bytes occupied by the identifier of the cell in the third information, or the coding scheme. For another example, the UE may obtain the third information from a base station to which the identifier of the cell included in the third information belongs or from another channel.

It should be understood that S101 may also be replaced with: The UE finds (find/know) that the base station changes to the first base station (find the NG-RAN is changed), or determines that the cell changes to the cell of the first base station (find the cell is changed).

In addition, S101 may also be replaced with: The UE determines/finds that no data of the first multicast/broadcast service is received, no first multicast/broadcast service is received, or no first multicast/broadcast data is received. The UE has joined the first multicast/broadcast service and is in the RRC-inactive state.

S102: The terminal sends at least one of a first message, a second message, a third message, a ninth message, or a tenth message to the first access network device.

For example, the terminal is UE and the first access network device is a first base station. The UE may send at least one of the first message, the second message, the third message, the ninth message, or the tenth message to the first base station.

Correspondingly, the first base station receives at least one of the first message, the second message, the third message, the ninth message, or the tenth message.

The following separately describes the first message, the second message, the third message, the ninth message, and the tenth message.

(1) The first message may indicate the first base station to send data of the first multicast/broadcast service, or the first message may indicate interest on the first multicast/broadcast service (indicate interest on the related MBS session).

The data of the first multicast/broadcast service may be replaced with the first multicast/broadcast service, first multicast/broadcast data, or data of a first multicast/broadcast session.

Optionally, in this application, that the first message indicates the first base station to send data of the first multicast/broadcast service may be replaced with that the first message notifies the first base station to send data of the first multicast/broadcast service. Alternatively, that the first message indicates the first base station to send data of the first multicast/broadcast service may be replaced with that the first message notifies or indicates the first base station to send a reception configuration of the first multicast/broadcast service. The reception configuration may also be referred to as configuration information used to receive the first multicast/broadcast service, for example, including a point-to-multipoint configuration (PTM configuration) and the reception configuration (reception configuration).

It should be understood that the first message may carry information indicating or notifying the first base station to send the data of the first multicast/broadcast service or indicating or notifying the first base station to send the reception configuration of the first multicast/broadcast service, or the first message may be a message indicating or notifying the first base station to send the data of the first multicast/broadcast service or indicating or notifying the first base station to send the reception configuration of the first multicast/broadcast service. For example, the first message may carry an identifier of the first multicast/broadcast service, the identifier may be a multicast/broadcast service or multicast/broadcast session identifier MBS session ID, the MBS session ID may be a temporary mobile group identity (temporary mobile group identity, TMGI), and the MBS session ID may also be an IP multicast address (IP multicast address).

It should be understood that notifying or indicating the first base station to send the first multicast/broadcast service may also be understood as notifying or indicating the first base station to trigger establishment of the multicast/broadcast session, or may be understood as triggering the first base station to trigger establishment of 5G core network shared multicast/broadcast service traffic delivery (5GC shared MBS traffic delivery).

For example, if the UE receives no data of the first multicast/broadcast service after determining that the base station or the cell changes, the UE may send the first message in S102, to indicate the first base station to send the data and/or the reception configuration of the first multicast/broadcast service. In addition, the UE may implicitly indicate, based on the first message, the first base station to update context of the first multicast/broadcast session, to effectively manage the first multicast/broadcast session, and improve network resource utilization.

(2) The second message indicates the first base station to update context of the first multicast/broadcast service, or the second message may indicate interest on the first multicast/broadcast service.

The context of the first multicast/broadcast service may be replaced with the context of the first multicast/broadcast session.

For example, if the UE still receives the data of the first multicast/broadcast service after determining that the base station or the cell changes, the UE may send the second message in S 102, to indicate the first base station to update the context of the first multicast/broadcast session, so as to effectively manage the first multicast/broadcast session, and improve network resource utilization.

(3) The third message is used to resume an RRC connection of the UE. In other words, the third message may be used to request to enter an RRC-connected mode.

The third message may include an RRC resume request (RRC resume request) message.

For example, if the UE may send the third message after determining that the base station or the cell changes, and regardless of whether the UE receives the data of the first multicast/broadcast service after determining that the base station or the cell changes, the UE may request to be resumed to the RRC-connected mode based on the third message, so that the UE receives the data and/or the reception configuration of the first multicast/broadcast service in the RRC-connected mode. In addition, the UE may implicitly indicate, based on the third message, the first base station to update the context of the first multicast/broadcast session, and may further implicitly indicate, based on the third message, the first base station to establish the multicast/broadcast session, to effectively manage the first multicast/broadcast session, and improve network resource utilization.

(4) The ninth message is used to activate a user plane connection. In other words, the ninth message may be used to request to activate a user plane connection of an associated PDU session (associated PDU session), or used to request to activate the associated PDU session. An association between the associated PDU session and the first multicast/broadcast service may be understood as: The UE may request to join or leave the first multicast/broadcast service through control plane signaling of the associated PDU session. After the first multicast/broadcast service is successfully joined, the associated PDU session may be further used to transmit the data of the first multicast/broadcast service. For example, if the UE finds/determines that no first multicast/broadcast service is received, for example, a reason is that the changed first base station does not support the UE in receiving the data in the RRC-inactive state, or for another example, if the changed base station or cell is outside the RNA, that is, if the UE moves out of the RNA area, and the changed base station does not support the UE in receiving the data in the RRC-inactive state, the UE may send the ninth message to the first base station, where the ninth message carries an ID of the associated PDU session, and the ninth message may be a service request (service request) message. Then, the first base station sends the ninth message to the AMF, and the AMF further sends the ninth message to the SMF, to trigger activation of the ID of the associated PDU session, so as to trigger establishment of the first multicast/broadcast session to the first base station.

(5) The tenth message is used to request registration. In other words, the tenth message may be used by the UE to request to be registered with a network. For example, if the UE finds/determines that no first multicast/broadcast service is received, and the UE moves out of a registration area (registration area, RA), for example, because the changed first base station or cell is outside the registration area, the UE may send the tenth message to the base station. The tenth message carries an ID of the associated PDU session, and the tenth message may be a registration request (registration request) message. Then, the first base station sends the tenth message to the AMF, and the AMF further sends the tenth message to the SMF, to trigger activation of the ID of the associated PDU session, so as to trigger establishment of the first multicast/broadcast session to the first base station.

The first message, the second message, or the third message may be a radio (radio) message, and the radio message may be an RRC message. The RRC message may be an RRC resume request (RRC resume request) message. The radio message may also be another non-RRC message. For example, although the non-RRC message has a different name from the RRC message, the non-RRC message may have a same or similar function as the RRC message. The function herein includes at least an indication function (for example, indicating content indicated by the first message, the second message, or the third message) or a notification function (for example, notifying content notified by the first message, the second message, or the third message) of the first message, the second message, or the third message.

The ninth message or the tenth message may be a non-access stratum (non-access stratum, NAS) message. The NAS message may be a service request message, may be a registration request message, may be an uplink non-access stratum data transport (UL NAS transport) message, or may be another NAS message. This is not limited.

It should be understood that at least one of the first message, the second message, the third message, the ninth message, or the tenth message may include at least one of an identifier of the UE, an identifier of the first multicast/broadcast service, or a reason for sending the message by the UE.

In embodiments of this application, the identifier of the UE includes, for example, an inactive radio network temporary identifier (inactive radio network temporary identifier, I-RNTI) of the UE, may be a radio network temporary identifier (radio network temporary identifier, RNTI) of the UE, or may be a 5G temporary mobile subscription identifier (5G s-temporary mobile subscription identifier, 5G-S-TMSI), a subscription permanent identifier (subscription permanent identifier, SUPI), a generic public subscription identifier (generic public subscription identifier, GPSI), a subscription concealed identifier (subscription concealed identifier, SUCI), a generic public subscription identifier (generic public subscription identifier, GPSI), a permanent equipment identifier (permanent equipment identifier, PEI), an international mobile subscriber identity (international mobile subscriber identity, IMSI), a globally unique temporary identity (globally unique temporary identity, GUTI), or an NG application protocol (NG application protocol, NGAP) identifier (NGAP UE ID). The NGAP UE ID may include a RAN NGAP UE ID allocated by the base station and/or an AMF NGAP UE ID allocated by the AMF.

In addition, the identifier of the first multicast/broadcast service may include an identifier of a multicast/broadcast session of the first multicast/broadcast service, the multicast/broadcast session of the first multicast/broadcast service may also be referred to as a first multicast/broadcast session, and the identifier of the multicast/broadcast session of the first multicast/broadcast service may also be referred to as a first multicast/broadcast session identifier (MBS session ID). In this application, the multicast/broadcast session identifier may be a TMGI, or may be a source specific IP address (source specific IP address). The source specific IP address may be understood as an address of a multicast/broadcast group, and a terminal or network element that joins the multicast/broadcast service is expected to send a join request message to the source specific IP address. The source specific IP address may be used as a type of the multicast/broadcast service identifier.

The reason for sending the message by the UE may include: The message is used to request to receive the data of the first multicast/broadcast service, the message is used to obtain configuration information for receiving the first multicast/broadcast service, the message is used to trigger establishment of a session (which may also be referred to as the first multicast/broadcast session) of the first multicast/broadcast service, the message is used to indicate interest on the first multicast/broadcast service, or the message indicates to request to join the first multicast/broadcast service. The message may carry an identifier, a cause value, an index, or indication information corresponding to at least one of the foregoing examples of reasons, to indicate a corresponding reason.

In addition, if the UE determines that the base station changes from a second base station to the first base station, at least one of the first message, the second message, or the third message may further include an identifier of the second base station.

Based on the procedure shown in FIG. 6, when the UE that has joined the first multicast/broadcast service and is in the RRC-inactive state determines that the base station changes to the first base station, or when the UE determines that the cell changes to the cell in the first base station, the UE may send at least one of the first message, the second message, the third message, the ninth message, or the tenth message to the first base station. Correspondingly, the first base station may learn, based on at least one of the first message, the second message, the third message, the ninth message, or the tenth message, that the UE moves to a coverage area of the first base station to receive the first multicast/broadcast service, and creates a first multicast/broadcast session or updates context of the first multicast/broadcast session in a timely manner, to effectively manage the first multicast/broadcast session, and improve network resource utilization.

In addition, it should be further understood that in S 101, "the UE determines that a base station changes to the first base station, or determines that a cell changes to a cell of the first base station, and the UE has joined a first multicast/broadcast service and is in an RRC-inactive state" may also be replaced with "the UE determines or finds (find) that no data of the first multicast/broadcast service is received (no multicast/MBS data received), and the UE has joined a first multicast/broadcast service and is in an RRC-inactive state". Optionally, in the alternative description, a reason why the UE determines that no data of the first multicast/broadcast service is received may include: The base station of the UE changes, or the cell of the UE changes. The UE may determine, according to the method described in S101, that the base station changes and/or that the cell changes.

In other words, a condition for triggering the UE to perform S102 in this application includes at least one of the following: The UE determines that the base station changes to the first base station, for example, a base station different from the first base station changes to the first base station. Alternatively, the UE determines that the cell changes, for example, a cell different from the before camped cell under the first base station or another cell that is not under the first base station changes to the cell of the first base station. Alternatively, the UE determines/finds that no data of the first multicast/broadcast service is received. Alternatively, the UE moves out of the registration area.

The following describes a processing manner in which the first base station receives at least one of the first message, the second message, the third message, the ninth message, or the tenth message. According to whether the base station of the UE changes, the processing manner of the first base station includes at least Manner 1 and Manner 2 in the following processing manners.

It may be understood that, if the base station of the UE does not change, but only the cell of the UE changes, at least one of the first message, the second message, the third message, the ninth message, or the tenth message received by the first base station may not include an identifier of another base station. For example, the context of the first multicast/broadcast session may be updated in Manner 1. If at least one of the first message, the second message, the third message, the ninth message, or the tenth message received by the first base station includes the identifier of the second base station, it may indicate that the base station of the UE changes from the second base station to the first base station. In this case, the context of the first multicast/broadcast session may be updated in Manner 2.

### Manner 1

If the base station of the UE does not change, but only the cell of the UE changes, and if the UE receives no first multicast/broadcast service, the first base station triggers establishment of the first multicast/broadcast session. For example, the first base station may establish the first multicast/broadcast service to the cell, or distribute the first multicast/broadcast service to the cell, or establish the first multicast/broadcast service to the cell. If the UE receives the first multicast/broadcast service, the first base station may update the context of the first multicast/broadcast session. For example, if the context of the first multicast/broadcast session includes an identifier of the UE and a quantity of UEs that joins/join the first multicast/broadcast session through the cell of the base station, after the first base station receives at least one of the first message, the second message, the third message, the ninth message, or the tenth message, the first base station may establish the first multicast/broadcast service to the cell, or distribute the first multicast/broadcast service to the cell, or establish the first multicast/broadcast service to the cell, so that the cell learns that new UE moves to a coverage area of the cell to receive the first multicast/broadcast service in a timely manner.

In Manner 1, if the message received by the first base station includes the first message (or includes the first message and the third message), and the first base station has established the first multicast/broadcast session, or the first base station has stored the context of the first multicast/broadcast session, the first base station may update the context of the first multicast/broadcast session in response to the first message. For example, the first base station may add the identifier of the UE to a UE identifier list that is of the cell of the first base station and that is of the context of the first multicast/broadcast session. The quantity of UEs that are added to the first multicast/broadcast session through the cell may be further increased by 1 by the first base station.

In addition, in Manner 1, the first base station may further send the reception configuration of the first multicast/broadcast service to the UE. As described above, if the UE receives no data of the first multicast/broadcast service after determining that the base station changes or the cell changes, the UE may send at least the first message in S102.

A reason why the UE receives no data of the first multicast/broadcast service may be that the UE moves to the first base station that establishes no first multicast/broadcast session previously, or the UE obtains no reception configuration of the first multicast/broadcast service under the current cell. In Manner 1, only that the UE receives no corresponding data because the UE obtains no reception configuration of the first multicast/broadcast service under the current cell is considered. Because the UE has joined the first multicast/broadcast service before changing the cell, it indicates that the first base station has established the multicast/broadcast session. Therefore, when receiving the first message from the UE, the first base station may send the reception configuration to the UE, so that the UE receives the data of the first multicast/broadcast service based on the reception configuration.

In addition, if the message received by the first base station in S102 includes the second message (or includes the second message and the third message), the first base station may update the context of the first multicast/broadcast session in response to the second message. As described above, if the UE receives no data of the first multicast/broadcast service after determining that the base station changes or the cell changes, the UE may send at least the second message in S102. Therefore, when receiving the second message, it indicates that the UE can still receive the data of the first multicast/broadcast service currently, and the first base station only needs to update the context of the first multicast/broadcast session, and may not need to send the reception configuration of the first multicast/broadcast service to the UE.

When the message received by the first base station in S102 includes the third message, the first base station may trigger to send the data of the first multicast/broadcast service, and may also update the context of the first multicast/broadcast service. For example, the third message further carries a cause value, that is, a reason for sending the third message. In this way, the first base station may distinguish the reason for sending the third message.

### Manner 2

For ease of description, Manner 2 may be classified into Manner 2.1, Manner 2.2, Manner 2.3, Manner 2.4, and Manner 2.5 based on a type of the message sent by the UE in S102. In Manner 2.1, the message sent by the UE in S 102 includes the first message. In Manner 2.2, the message sent by the UE in S 102 includes the second message. In Manner 2.3, the message sent by the UE in S102 includes the third message. In Manner 2.4, the message sent by the UE in S102 includes the ninth message. In Manner 2.5, the message sent by the UE in S102 includes the tenth message.

### Manner 2.1

When the base station of the UE changes, and the message received by the first base station in S102 includes the first message (or includes the first message and the third message), a reason why the UE receives no data of the first multicast/broadcast service may be that the UE moves to the first base station that establishes no first multicast/broadcast session previously, or the UE obtains no reception configuration of the first multicast/broadcast service under the current base station. Therefore, when receiving the first message from the UE, the first base station needs to determine whether the first multicast/broadcast session has been established (or determine whether the context of the first multicast/broadcast session has been stored), and performs a different update operation on the context of the first multicast/broadcast session based on a determining result.

Specifically, in Manner 2, when the message received by the first base station in S102 includes the first message, an update operation of the first base station may include the implementation shown in Manner 2.1.1 or Manner 2.1.2.

### Manner 2.1.1

When the base station of the UE changes, the message received by the first base station in S102 includes the first message, and the first base station determines that no first multicast/broadcast session is established, or the first base station stores no context of the first multicast/broadcast session, the first base station may trigger establishment of the first multicast/broadcast session, and obtain the context of the first multicast/broadcast session in a process of establishing the first multicast/broadcast session. In other words, in Manner 2.1.1, the update operation of the context of the first multicast/broadcast session includes: The first base station obtains the context of the first multicast/broadcast session in a process of establishing the first multicast/broadcast session.

In addition, in Manner 2.1.1, after establishing the first multicast/broadcast session, the first base station may further send the reception configuration of the first multicast/broadcast session to the UE, so that the UE receives the data of the first multicast/broadcast service based on the reception configuration of the first multicast/broadcast session.

In addition, in Manner 2.1.1, the first base station may further authenticate (authorize) or check (check) the UE that sends the first message. That is, context of the UE is still in the base station before changing to the first base station, and the context of the UE also includes information about the first multicast/broadcast service that the UE previously joins. Therefore, for example, the first base station may send the message to the base station before changing to the first base station, to request to authenticate or check whether the UE has joined the first multicast/broadcast service. If it is learned, through a feedback message, that the UE has joined the first multicast/broadcast service, the first base station may trigger establishment of the first multicast/broadcast session, and obtain the context of the first multicast/broadcast session in a process of establishing the first multicast/broadcast session.

### Manner 2.1.2

When the base station of the UE changes, the message received by the first base station in S102 includes the first message, and the first base station determines that the first multicast/broadcast session has been established, or the first base station has stored the context of the first multicast/broadcast session, the first base station may update the context of the first multicast/broadcast session.

For example, the first base station may update the quantity of UEs that join the multicast/broadcast session in the context of the first multicast/broadcast session, so that the first base station can learn a quantity of UEs that receive first multicast/broadcast session data in the base station.

In addition, in Manner 2.1.2, the first base station may further send the reception configuration of the first multicast/broadcast session to the UE, so that the UE receives the data of the first multicast/broadcast service based on the reception configuration of the first multicast/broadcast session.

In addition, in Manner 2.1.2, the first base station may further authenticate (authorize) or check (check) the UE that sends the first message. That is, context of the UE is still in the base station before changing to the first base station, and the context of the UE also includes information about the first multicast/broadcast service that the UE previously joins. Therefore, for example, the first base station may send the message to the base station before changing to the first base station, to request to authenticate or check whether the UE has joined the first multicast/broadcast service. If it is learned, through a feedback message, that the UE has joined the first multicast/broadcast service, the first base station may trigger update of the context of the first multicast/broadcast session.

### Manner 2.2

If the message received by the first base station in S102 includes the second message, it indicates that the UE can still receive the data of the first multicast/broadcast service currently, that is, the first base station has stored the context of the first multicast/broadcast session. Therefore, the first base station only needs to update the stored context of the first multicast/broadcast session, and does not need to send the reception configuration of the first multicast/broadcast service to the UE. For a process in which the first base station updates the context of the first multicast/broadcast session, refer to Manner 1 or Manner 2.1.2. Details are not described herein again.

In addition, in Manner 2.2, the first base station may further authenticate (authorize) or check (check) the UE that sends the second message. That is, context of the UE is still in the base station before changing to the first base station, and the context of the UE also includes information about the first multicast/broadcast service that the UE previously joins. Therefore, for example, the first base station may send the message to the base station before changing to the first base station, to request to authenticate or check whether the UE has joined the first multicast/broadcast service. If it is learned, through a feedback message, that the UE has joined the first multicast/broadcast service, the first base station may trigger update of the context of the first multicast/broadcast session.

### Manner 2.3

If the message received by the first base station in S102 includes the third message, the first base station may update the stored context of the first multicast/broadcast session in response to the third message. In Manner 2.3, for a process in which the first base station updates the context of the first multicast/broadcast session, refer to Manner 1 or Manner 2.2. Details are not described herein again.

### Manner 2.4

If the message received by the first base station in S102 includes the ninth message, for example, the ninth message may be a service request message, it may indicate that the UE receives no data of the first multicast/broadcast service. For example, a first base station to which the UE moves does not support the UE in receiving the data of the first multicast/broadcast service in the RRC-inactive state. For another example, if the first base station to which the UE moves is outside the RNA, that is, the UE moves out of the RNA area, and the first base station does not support the UE in receiving the data in the RRC-inactive state, the UE initiates (invoke) a service request message, where the service request message carries a first protocol data unit PDU session identifier, to request to activate the first PDU session, so as to trigger establishment of the first multicast/broadcast session. The first PDU session is associated with the first multicast/broadcast service. That the first PDU session is associated with the first multicast/broadcast service may be understood as that the UE may request to join or leave the first multicast/broadcast service through control plane signaling of the first PDU session. After joining succeeds, the first PDU session may be further used to transmit the data of the first multicast/broadcast service.

### Manner 2.5

If the message received by the first base station in S102 includes the tenth message, for example, the tenth message may be a registration request message, it may indicate that a first base station to which the UE moves is outside the registration area of the UE. In this case, the UE initiates (invoke) a registration request message, where the registration request message carries a first protocol data unit PDU session identifier, to request to activate the first PDU session, so as to trigger establishment of the first multicast/broadcast session. The first PDU session is associated with the first multicast/broadcast service. That the first PDU session is associated with the first multicast/broadcast service may be understood as that the UE may request to join or leave the first multicast/broadcast service through control plane signaling of the first PDU session. After joining succeeds, the first PDU session may be further used to transmit the data of the first multicast/broadcast service.

It should be understood that, in Manner 2, the base station of the UE changes from the second base station to the first base station. Therefore, in addition to updating the context of the first multicast/broadcast service by the first base station, the context of the first multicast/broadcast service further needs to be updated by the second base station. This is because the UE is no longer in the coverage area of the second base station.

For example, in Manner 2, the first base station may send the message to the second base station, so that the second base station updates the context of the first multicast/broadcast service. Manner 2 is described by using the fourth message, the fifth message, or the eighth message as an example. That a function of notifying or indicating the second base station to update the context of the first multicast/broadcast service may be further implemented by using another message is not limited in this application.

For example, after the first base station receives at least one of the first message, the second message, the third message, the ninth message, or the tenth message, the first base station may send the fourth message, the fifth message, or the eighth message to the second base station based on the identifier of the second base station carried in the message. Therefore, the second base station updates the context of the first multicast/broadcast session based on the fourth message, the fifth message, or the eighth message. Therefore, in other words, the fourth message and/or the fifth message and/or the eighth message are/is used to trigger the second base station to update the context of the first multicast/broadcast session.

For example, the fourth message may be used by the second base station to update the context of the first multicast/broadcast session. The fifth message may be used to extract context of the UE. The eighth message is used to authenticate whether the UE has joined the first multicast/broadcast service.

Optionally, the fourth message, the fifth message, or the eighth message may be an Xn message, an X2 message, or a message sent between base stations.

Optionally, the fourth message and/or the fifth message and/or the eighth message may include an identifier of the UE and/or an identifier of the first multicast/broadcast service.

If the fourth message and/or the fifth message and/or the eighth message include/includes the identifier of the UE, the second base station may update context of all multicast/broadcast sessions associated with the identifier of the UE. For example, the identifier of the UE is deleted from the context of all the multicast/broadcast sessions that include the identifier of the UE, and/or a quantity of identifiers of UEs is subtracted from a quantity of UEs that join the multicast/broadcast sessions. If the fourth message and/or the fifth message and/or the eighth message include/includes the identifier of the first multicast/broadcast service, the second base station may update the context of the first multicast/broadcast session associated with the identifier of the first multicast/broadcast service. For example, the identifier of the UE is deleted from the context of the first multicast/broadcast session, and/or a quantity of identifiers of UEs is subtracted from a quantity of UEs that join the first multicast/broadcast session in the context of the first multicast/broadcast session. It should be understood that there may be one or more identifiers of UEs herein. For example, after one or more UEs move, the method shown in FIG. 6 is performed.

Optionally, based on the eighth message, the second base station may further authenticate or check (check) whether the UE has joined the first multicast/broadcast session. For example, the second base station sends a sixth message to the first base station only after the authentication or check succeeds.

When receiving the fourth message and/or the fifth message, the second base station updates the context of the first multicast/broadcast session, and updates a resource of the multicast/broadcast session in a timely manner, thereby improving network resource utilization.

Optionally, after the second base station updates the context of the first multicast/broadcast service, if a quantity of UEs that join the first multicast/broadcast service in the context is 0, or an identifier of the UE that joins the first multicast/broadcast service is empty, that is, if the identifier of the UE that joins the first multicast/broadcast service or the UE does not exist, the second base station may release the first multicast/broadcast session or release shared multicast/broadcast service traffic delivery of the first multicast/broadcast session.

Optionally, when the second base station determines that a first timer expires (expires), the second base station may release a first transmission resource, where the first transmission resource is used to transmit the first multicast/broadcast service. The first transmission resource may be the first multicast/broadcast session, or the first transmission resource may be shared multicast/broadcast service traffic delivery. In addition, the first timer may be a periodic access network notification area update timer (periodic RAN notification area update (RNAU) Timer).

In addition, if the first base station determines, based on the identifier of the UE, that no context of the UE is stored, the first base station may send a fifth message to the second base station, and the second base station may send the context of the UE to the first base station based on the fifth message.

Optionally, in embodiments of this application, the second base station may further send a sixth message to the first base station, where the sixth message may include a configuration (which may be referred to as the first configuration) of the first multicast/broadcast service, and the first configuration may be used to transmit the data of the first multicast/broadcast service. For example, the first configuration may include a point-to-multipoint configuration (PTM configuration), the first configuration may further include point-to-multipoint control information (PTM control information), the first configuration may further include a multicast/broadcast service configuration (MBS configuration), and the first configuration may further include point-to-multipoint control information (PTM control information). The sixth message may further include context information of the UE. The context information of the UE may include related information of the UE, for example, may include identification information of the UE. The identification information may be an I-RNTI, for example, the I-RNTI may be an I-RNTI newly generated by the second base station. The context information of the UE may further include information about a PDU session of the UE. For example, the information about the PDU session may include parameter information of a QoS flow included in the PDU session. The context information of the UE may further include a periodic access network notification area timer (periodic RNAU timer). The sixth message may further include information about the first multicast/broadcast service, and the information about the first multicast/broadcast service may include an identifier of the first multicast/broadcast service and multicast/broadcast QoS information of the first multicast/broadcast service. The multicast/broadcast QoS information may include a multicast/broadcast QoS parameter, and the like.

After receiving the sixth message, the first base station may send a seventh message to the UE, where the seventh message includes the first configuration or first capability information. The first configuration includes a configuration used to receive the first multicast/broadcast service. The first capability information indicates whether the first base station supports receiving in the RRC-inactive state (or the first capability information indicates whether the first base station supports the UE in receiving data of a multicast/broadcast service (or the first multicast/broadcast service) in the RRC-inactive state). The first capability information may be sent when the first base station supports a capability.

The first capability information may be in a bit manner. For example, when a value is 1, it indicates that receiving in the RRC-inactive state is supported, or when a value is 0, it indicates that receiving in the RRC-inactive state is not supported. Alternatively, when a value is 0, it indicates that receiving in the RRC-inactive state is supported, or when a value is 1, it indicates that receiving in the RRC-inactive state is not supported.

In another example, the first capability information may be an enumeration type (enumeration). When a value is an integer, it indicates that receiving in the RRC-inactive state is supported, or when a value is another integer, it indicates that receiving in the RRC-inactive state is not supported.

In another example, the first capability information may be one or more information elements (information element, IE). When the one or more information elements appear, it indicates that receiving in the RRC-inactive state is supported, or when the one or more information elements do not appear, it indicates that receiving in the RRC-inactive state is not supported. Alternatively, when the one or more information elements appear, it indicates that receiving in the RRC-inactive state is not supported, or when the one or more information elements do not appear, it indicates that receiving in the RRC-inactive state is supported.

The indicating whether receiving in the radio resource control inactive state is supported may be understood as:
supporting receiving in the radio resource control inactive state (support the RRC-inactive MBS data reception);
not supporting receiving in the radio resource control inactive state (does not support the RRC-inactive MBS data reception);
supporting sending in the radio resource control inactive state (support the RRC-inactive MBS data transmission);
not supporting sending in the radio resource control inactive state (does not support the RRC-inactive MBS data transmission);
having a capability to support receiving in the radio resource control inactive state (has the capability to support reception in RRC-inactive state);
having no capability to support receiving in the radio resource control inactive state (does not have the capability to support reception in RRC-inactive state);
having a capability to support sending in the RRC-inactive state (has the capability to support the RRC-inactive MBS data transmission); and
having no capability to support sending in the RRC-inactive state (does not have the capability to support the RRC-inactive MBS data transmission).

Optionally, if first capability information carried in the seventh message indicates that the first base station supports receiving in the radio resource control inactive state, and if the UE has received no first multicast/broadcast service, the UE may learn, based on an indication of the first capability information, that the first multicast/broadcast service is to be sent (is going to be transferred) and may not need to initiate a service request (not need perform Service Request) message, where the service request message may be understood as a type of the ninth message. If the seventh message carries no first capability information, and the UE has received no first multicast/broadcast service, the UE initiates (invoke) a service request message, where the service request message carries a first protocol data unit PDU session identifier, to request to activate the first PDU session, so as to trigger establishment of the first multicast/broadcast session. The first PDU session is associated with the first multicast/broadcast service. It should be understood that, that the first PDU session is associated with the first multicast/broadcast service may be understood as that the UE may request to join or leave the first multicast/broadcast service through control plane signaling of the first PDU session. After joining succeeds, the first PDU session may be further used to transmit the data of the first multicast/broadcast service.

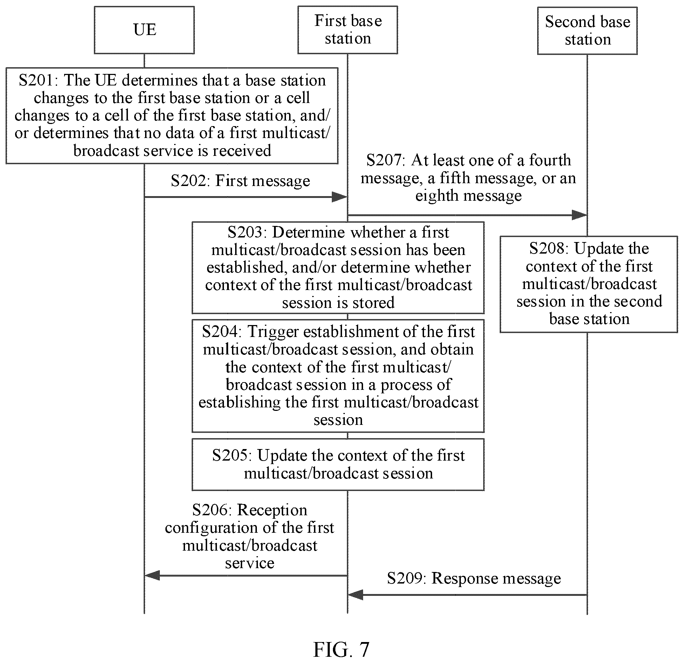

For example, as shown in FIG. 7, a communication method based on Manner 2.1 provided in this application may include the following steps.

S201: UE determines that a base station changes to a first base station or a cell changes to a cell of the first base station, and/or the UE determines/finds that no data of a first multicast/broadcast service is received.

S202: The UE sends a first message to the first base station, where the first message may indicate the first base station to send data of the first multicast/broadcast service, the first message may indicate the first base station to send a reception configuration of the first multicast/broadcast service, or the first message may indicate interest on the first multicast/broadcast service (indicate interest on the related MBS session).

Correspondingly, the first base station receives the first message.

S203: The first base station determines whether a first multicast/broadcast session has been established, and/or the first base station determines whether context of the first multicast/broadcast session is stored.

Corresponding to Manner 2.1.2, if the first base station determines that no first multicast/broadcast session is established, and/or the first base station determines that no context of the first multicast/broadcast session is stored, S205 and S206 are performed.

Corresponding to Manner 2.1.1, if the first base station determines that the first multicast/broadcast session has been established, and/or the first base station determines that the context of the first multicast/broadcast session is stored, S204 and S206 are performed.

S204: The first base station triggers establishment of the first multicast/broadcast session, and obtains the context of the first multicast/broadcast session in a process of establishing the first multicast/broadcast session.

It should be understood that a manner of establishing the first multicast/broadcast session is not required in this application.

S205: The first base station updates the context of the first multicast/broadcast session.

For a manner in which the first base station updates the context of the first multicast/broadcast session, refer to the description in Manner 2.1.2.

S206: The first base station sends the data and/or the reception configuration of the first multicast/broadcast service to the UE.

If S204 is performed, the reception configuration may be obtained in a process of establishing the first multicast/broadcast session in S204. If S205 is performed, the reception configuration may be obtained by the first base station in a process of establishing the first multicast/broadcast session before.

Optionally, if the UE determines that the base station changes from a second base station to the first base station in S201, the first message in S202 may include an identifier of the second base station or an identifier of the UE.

When the first base station obtains the identifier of the second base station in the first message, or obtains the identifier of the UE in the first message and identifies, based on the identifier of the UE, that a source base station (last serving NG-RAN/last serving gNB/source NG-RAN) of the UE is the second base station (that is, the base station of the UE changes from the second base station to the first base station), after S202 shown in FIG. 7, the following steps may be further performed.

S207: The first base station may send at least one of a fourth message, a fifth message, or an eighth message to the second base station.

The fourth message may notify the second base station to update the context of the first multicast/broadcast session.

The fifth message may be used to extract context of the UE.

The eighth message may be used to authenticate whether the UE has joined the first multicast/broadcast service, and the eighth message may carry the identifier of the UE and an identifier of the first multicast/broadcast service.

The fourth message, the fifth message, and the eighth message each may be an Xn message or an X2 message, that is, may be a message used for communication between base stations.

Optionally, at least one of the fourth message, the fifth message, or the eighth message may include an identifier of the first multicast/broadcast session and/or the identifier of the UE.

Correspondingly, the second base station receives at least one of the fourth message, the fifth message, or the eighth message.

S208: The second base station may update the context of the first multicast/broadcast session in the second base station in response to at least one of the fourth message, the fifth message, or the eighth message.

For example, the second base station may update the context of the first multicast/broadcast session based on the identifier of the UE and/or the identifier of the first multicast/broadcast service that are/is carried in at least one of the fourth message, the fifth message, or the eighth message. For details, refer to the descriptions in this application. Details are not described herein again.

For another example, the second base station may authenticate or check (check) the UE based on the identifier of the UE and the identifier of the first multicast/broadcast service that are carried in the eighth message, that is, authenticate whether the UE has joined the first multicast/broadcast service. For example, if the second base station finds that there is no identifier of the UE in the stored context of the first multicast/broadcast service or there is no information about the first multicast/broadcast service in the context of the UE, the authentication fails. If the second base station finds that there is the identifier of the UE in the stored context of the first multicast/broadcast service or there is information about the first multicast/broadcast service in the context of the UE, the authentication succeeds.

S209: The second base station sends a response message of at least one of the fourth message, the fifth message, or the eighth message to the first base station.

Optionally, the response message may be a sixth message, and the sixth message may be an Xn message or an X2 message, or may be a message used for communication between base stations.

The sixth message may include context information of the UE, and the context information of the UE may include related information of the UE, for example, may include identification information of the UE, where the identification information may be an I-RNTI. For example, the I-RNTI may be an I-RNTI newly generated by the second base station. The context information of the UE may further include information about a PDU session of a terminal device. For example, the information about the PDU session may include parameter information of a QoS flow included in the PDU session. The context information of the UE may further include a periodic access network notification area timer (periodic RNAU timer). The sixth message may further include information about the first multicast/broadcast service, and the information about the first multicast/broadcast service may include an identifier of the first multicast/broadcast service and multicast/broadcast QoS information of the first multicast/broadcast service. The multicast/broadcast QoS information may include a multicast/broadcast QoS parameter, and the like.

Based on the procedure shown in FIG. 7, when the UE determines that the base station changes to the first base station or the cell changes to the cell of the first base station, and/or the UE determines that no data of the first multicast/broadcast service is received, the UE may send the first message to the first base station, so that the first base station updates the context of the first multicast/broadcast service in a timely manner based on a second message, triggers the first base station to establish the first multicast/broadcast session, and triggers, based on the second message, the second base station to update the context of the first multicast/broadcast service.

It should be understood that, in the procedure shown in FIG. 7, S201 corresponds to S101 shown in FIG. 6. In other words, S201 is an implementation of S 101. In addition, S202 in FIG. 7 corresponds to S102 in FIG. 6. In other words, S202 is an implementation of S 102.

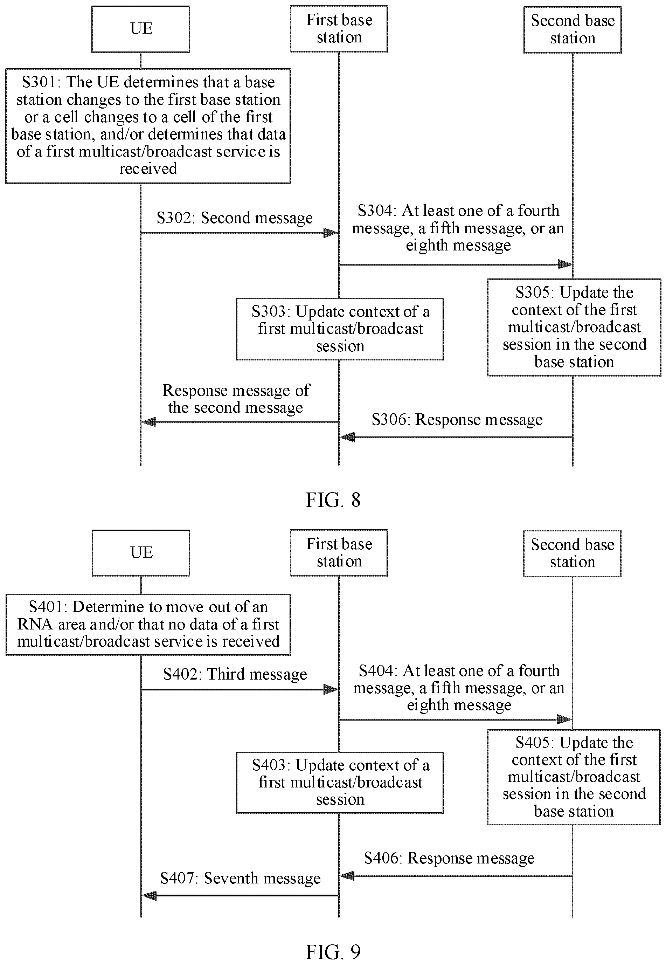

For example, as shown in FIG. 8, a communication method based on Manner 2.2 provided in this application may include the following steps.

S301: UE determines that a base station changes to a first base station or a cell changes to a cell of the first base station, and/or the UE determines that data of a first multicast/broadcast service is received.

S302: The UE sends a second message to the first base station, where the second message may indicate the first base station to update context of the first multicast/broadcast service.

Correspondingly, the first base station receives the second message.

S303: The first base station updates context of a first multicast/broadcast session.

For a manner in which the first base station updates the context of the first multicast/broadcast session, refer to the description in Manner 2.2.

The first base station may further send a response message of the second message to the UE.

Optionally, if the UE determines that the base station changes from a second base station to the first base station in S301, the second message in S302 may include an identifier of the second base station or an identifier of the UE.

When the first base station obtains the identifier of the second base station in the second message, or obtains the identifier of the UE in the second message and identifies, based on the identifier of the UE, that a serving base station of the UE is the second base station, after S302 shown in FIG. 8, the following steps may be further performed.

S304: The first base station sends at least one of a fourth message, a fifth message, or an eighth message to the second base station.

The fourth message may notify the second base station to update the context of the first multicast/broadcast session.

The fifth message may be used to extract context of the UE.

The eighth message may be used to authenticate whether the UE has joined the first multicast/broadcast service, and the eighth message may carry the identifier of the UE and an identifier of the first multicast/broadcast service.

The fourth message, the fifth message, and the eighth message each may be an Xn message or an X2 message, that is, may be a message used for communication between base stations.

Optionally, at least one of the fourth message, the fifth message, or the eighth message may include an identifier of the first multicast/broadcast session and/or the identifier of the UE.

Correspondingly, the second base station receives at least one of the fourth message, the fifth message, or the eighth message.

S305: The second base station may update the context of the first multicast/broadcast session in the second base station in response to at least one of the fourth message, the fifth message, or the eighth message.

For example, the second base station may update the context of the first multicast/broadcast session based on the identifier of the UE and/or the identifier of the first multicast/broadcast service that are/is carried in at least one of the fourth message, the fifth message, or the eighth message. For details, refer to the descriptions in this application. Details are not described herein again.

After the second base station updates the context of the first multicast/broadcast service, if a quantity of UEs that join the first multicast/broadcast service in the context is 0, or an identifier of the UE that joins the first multicast/broadcast service is empty, that is, there is no identifier of the UE, the second base station may release the first multicast/broadcast session or release shared multicast/broadcast service traffic delivery of the first multicast/broadcast session.

Optionally, the second base station determines that a first timer expires (expires), and the second base station may release the first multicast/broadcast session or release shared multicast/broadcast service traffic delivery of the first multicast/broadcast session. In addition, the first timer may be a periodic access network notification area update timer (periodic RNAU Timer).

S306: The second base station sends a response message of at least one of the fourth message, the fifth message, or the eighth message to the first base station.

Optionally, the response message may be a sixth message, and the sixth message may be an Xn message or an X2 message, or may be a message used for communication between base stations.

For example, the response message may be the sixth message. The sixth message may include context information of the UE, and the context information of the UE may include related information of the UE. For example, identification information of the UE may be included, and the identification information may be an I-RNTI. For example, the I-RNTI may be an I-RNTI newly generated by the second base station. The context information of the UE may further include information about a PDU session of a terminal device. For example, the information about the PDU session may include parameter information of a QoS flow included in the PDU session. The context information of the UE may further include a periodic access network notification area timer (periodic RNAU timer).

In addition, the sixth message may further include information about the first multicast/broadcast service, and the information about the first multicast/broadcast service may include an identifier of the first multicast/broadcast service and multicast/broadcast QoS information of the first multicast/broadcast service. The multicast/broadcast QoS information may include a multicast/broadcast QoS parameter, and the like.

After the second base station updates the context of the first multicast/broadcast service, if a quantity of UEs that join the first multicast/broadcast service in the context is 0, or an identifier of the UE that joins the first multicast/broadcast service is empty, that is, there is no identifier of the UE, the second base station may release the first multicast/broadcast session or release shared multicast/broadcast service traffic delivery of the first multicast/broadcast session.

Based on the procedure shown in FIG. 8, when the UE determines that the base station changes to the first base station or the cell changes to the cell of the first base station, and/or the UE determines that the data of the first multicast/broadcast service is received, the UE may send the second message to the first base station, so that the first base station updates the context of the first multicast/broadcast service in a timely manner based on the second message, and triggers, based on the second message, the second base station to update the context of the first multicast/broadcast service.

It should be understood that, in the procedure shown in FIG. 8, S301 corresponds to S101 shown in FIG. 6. In other words, S301 is an implementation of S101. In addition, S302 in FIG. 8 corresponds to S102 in FIG. 6. In other words, S302 is an implementation of S102.

For example, as shown in FIG. 9, a communication method based on Manner 2.3 provided in this application may be implemented by using the following steps.

S401: UE determines/finds to move out of an RNA area, and/or the UE determines/finds that no data of a first multicast/broadcast service is received (or is received). The UE determines/finds to move out of the RNA area. For example, a base station changes to a first base station or a cell changes to a cell of the first base station and a changed first base station or a changed cell of the first base station is outside the RNA area, and the UE determines that data of the first multicast/broadcast service is received.

Alternatively, S401 may be replaced with that UE determines/finds to move out of an RNA area. For example, a base station changes to a first base station or a cell changes to a cell of the first base station and a changed first base station or a changed cell of the first base station is outside the RNA area.

Alternatively, S401 may be replaced with that UE receives data of a first multicast/broadcast service, but finds to move out of an RNA area.

Alternatively, S401 may be replaced with that UE determines/finds that no data of a first multicast/broadcast service is received, and further finds to move out of an RNA area.

S402: The UE sends a third message to the first base station, where the third message may be used to resume an RRC connection of the UE.

Correspondingly, the first base station receives the third message.

S403: The first base station updates context of a first multicast/broadcast session.

For a manner in which the first base station updates the context of the first multicast/broadcast session, refer to the description in Manner 2.2.

Optionally, if the UE determines that the base station changes from a second base station to the first base station in S401, the second message in S402 may include an identifier of the second base station or an identifier of the UE.

When the first base station obtains the identifier of the second base station in the second message, or obtains the identifier of the UE in the second message and identifies, based on the identifier of the UE, that a serving base station of the UE is the second base station, after S402 shown in FIG. 8, the following steps may be further performed.

S404: The first base station sends at least one of a fourth message, a fifth message, or an eighth message to the second base station.

The fourth message may notify the second base station to update the context of the first multicast/broadcast session.

The fifth message may be used to extract context of the UE.

The eighth message may be used to authenticate whether the UE has joined the first multicast/broadcast service, and the eighth message may carry the identifier of the UE and an identifier of the first multicast/broadcast service.

The fourth message, the fifth message, and the eighth message each may be an Xn message or an X2 message, that is, may be a message used for communication between base stations.

Optionally, at least one of the fourth message, the fifth message, or the eighth message may include an identifier of the first multicast/broadcast session and/or the identifier of the UE.

Correspondingly, the second base station receives at least one of the fourth message, the fifth message, or the eighth message.

S405: The second base station may update the context of the first multicast/broadcast session in the second base station in response to at least one of the fourth message, the fifth message, or the eighth message.

For example, the second base station may update the context of the first multicast/broadcast session based on the identifier of the UE and/or the identifier of the first multicast/broadcast service that are/is carried in at least one of the fourth message, the fifth message, or the eighth message. For details, refer to the descriptions in this application. Details are not described herein again.

After the second base station updates the context of the first multicast/broadcast service, if a quantity of UEs that join the first multicast/broadcast service in the context is 0, or an identifier of the UE that joins the first multicast/broadcast service is empty, that is, there is no identifier of the UE, the second base station may release the first multicast/broadcast session or release shared multicast/broadcast service traffic delivery of the first multicast/broadcast session.

Optionally, the second base station determines that a first timer expires (expires), and the second base station may release the first multicast/broadcast session or release shared multicast/broadcast service traffic delivery of the first multicast/broadcast session. In addition, the first timer may be a periodic access network notification area update timer (periodic RNAU Timer).

S406: The second base station sends a response message of at least one of the fourth message, the fifth message, or the eighth message to the first base station.

The response message may be a sixth message, and the sixth message may be an Xn message or an X2 message, or may be a message used for communication between base stations.

Optionally, the response message may be the sixth message, and the sixth message may further include context information of the UE. The context information of the UE may include related information of the UE, for example, may include identification information of the UE. The identification information may be an I-RNTI, for example, the I-RNTI may be an I-RNTI newly generated by the second base station. The context information of the UE may further include information about a PDU session of a terminal device. For example, the information about the PDU session may include parameter information of a QoS flow included in the PDU session. The context information of the UE may further include a periodic access network notification area timer (periodic RNAU timer). The sixth message may further include information about the first multicast/broadcast service, and the information about the first multicast/broadcast service may include an identifier of the first multicast/broadcast service and multicast/broadcast QoS information of the first multicast/broadcast service. The multicast/broadcast QoS information may include a multicast/broadcast QoS parameter, and the like.

S407: The first base station sends a seventh message to the UE.

If first capability information carried in the seventh message indicates that the first base station supports receiving in a radio resource control inactive state, and if the UE has received no first multicast/broadcast service, the UE may learn, based on an indication of the first capability information, that the first multicast/broadcast service is to be sent (is going to be transferred) and may not need to initiate a service request message, where the service request message may be understood as a type of the ninth message. If the seventh message carries no first capability information, and the UE has received no first multicast/broadcast service, the UE initiates a service request message, where the service request message carries an associated PDU session identifier, to request to activate an associated PDU session, so as to trigger establishment of the first multicast/broadcast session. The associated PDU session is associated with the first multicast/broadcast service. It should be understood that, that the associated PDU session is associated with the first multicast/broadcast service may be understood as that the UE may request to join or leave the first multicast/broadcast service through control plane signaling of the associated PDU session. After joining succeeds, the associated PDU session may be further used to transmit the data of the first multicast/broadcast service.

Based on the procedure shown in FIG. 9, when the UE moves out of the RNA area, and/or the UE determines that no data of the first multicast/broadcast service is received, the UE may send the third message to the first base station, so that the first base station updates the context of the first multicast/broadcast service in a timely manner based on the third message, and triggers, based on the second message, the second base station to update the context of the first multicast/broadcast service.

It should be understood that, in the procedure shown in FIG. 9, S401 corresponds to S101 shown in FIG. 6. In other words, S401 is an implementation of S 101. In addition, S402 in FIG. 9 corresponds to S102 in FIG. 6. In other words, S402 is an implementation of S102.

Based on a same concept as that of the solution shown in FIG. 6, an embodiment of this application further provides another communication method, so that after UE moves out of a registration area or moves out of an RNA area, for example, when a changed base station or a changed cell of the UE is outside the registration area or the RNA area, a base station can establish a first multicast/broadcast session or update context of the first multicast/broadcast session in a timely manner, to improve network resource utilization.

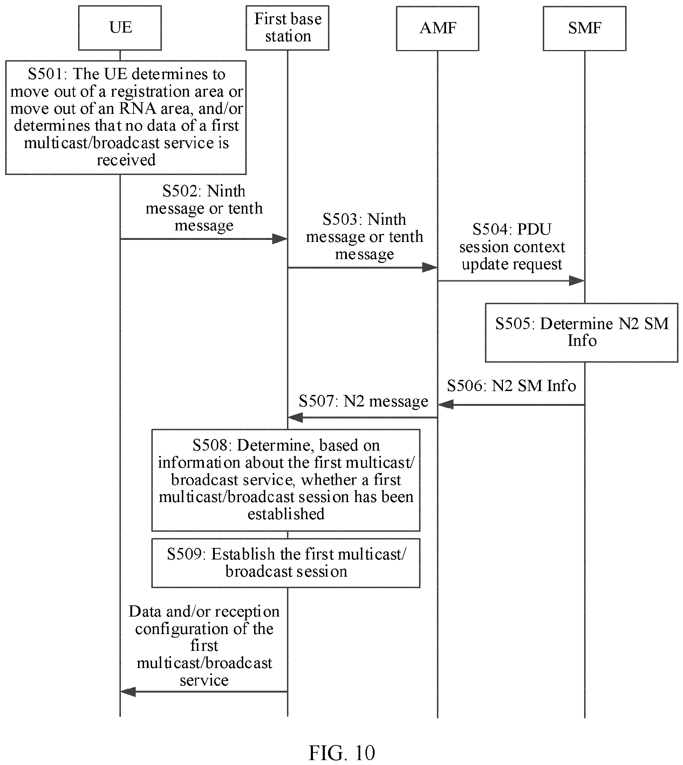

The method may be implemented by a terminal device (for example, UE), a mobility management network element (for example, an AMF), a session management network element (for example, an SMF), and an access network device (for example, a base station). The following uses an example in which the method is performed by the UE, the AMF, the SMF, and the base station for description. As shown in the FIG. 10, the communication method may include the following steps.

S501: UE determines to move out of a registration area or move out of an RNA area, and/or the UE determines that no data of a first multicast/broadcast service is received (or is received).

The UE determines to move out of the registration area or move out of the RNA area. For example, a base station changes to a first base station and the first base station is outside the registration area or the base station changes to the first base station and the first base station is outside the RNA, or a cell changes to a cell of the first base station and the cell is outside the registration area or the cell changes to the cell of the first base station and the cell is outside the RNA. Alternatively, the UE determines that no data of the first multicast/broadcast service is received.

Alternatively, UE determines/finds to move out of a registration area or an RNA area. For example, a base station changes to a first base station or a cell changes to a cell of the first base station, and a changed first base station or a changed cell of the first base station is outside the registration area or the RNA area.

Alternatively, UE has received data of a first multicast/broadcast service, but finds to move out of a registration area or an RNA area.

Alternatively, UE determines/finds that no data of a first multicast/broadcast service is received, and further finds to move out of a registration area or an RNA area.

For an implementation of S501, refer to S101. Details are not described herein again.

Optionally, the UE in S501 has joined the first multicast/broadcast service and is in an inactive state.

S502: The UE sends a ninth message or a tenth message to the first base station.

Correspondingly, the first base station receives the ninth message or the tenth message.

The ninth message may include a service request (service request) or uplink non-access stratum data transmission (UL NAS transport). The tenth message includes a registration request (registration request).

Optionally, the ninth message may further include an identifier of a PDU session used by the UE to join the first multicast/broadcast service, and the PDU session used by the UE to join the multicast service may be referred to as an associated PDU session identifier (associated PDU session ID).

S503: The first base station sends the ninth message or the tenth message to an AMF, where the ninth message or the tenth message carries the associated PDU session identifier.

S504: The AMF sends a PDU session context update request (Nsmf_PDUSession_UpdateSMContext request) to an SMF based on a control plane connection corresponding to an associated PDU session.

The PDU session context update request corresponds to the associated PDU session.

Correspondingly, the SMF receives the PDU session context update request.

S505: The SMF determines N2 session management information (N2 session management info, N2 SM Info). The N2 session management information may carry information about the first multicast/broadcast service, for example, an identifier of the first multicast/broadcast service and/or QoS parameter information of the first multicast/broadcast service.

The base station herein is a base station in which the UE is currently located, that is, the first base station.

Optionally, if the SMF finds, based on context (for example, SM context) corresponding to the PDU session, that the UE has joined the first multicast/broadcast service, the SMF performs S505.

S506: The SMF sends N2 SM Info to the AMF. The N2 SM Info may be included in the PDU session context update response message.

Correspondingly, the AMF receives the N2 SM Info.

S507: The AMF sends an N2 message to the base station, where the N2 message carries the N2 SM Info.

Correspondingly, the base station receives the N2 message.

S508: The first base station determines, based on the information about the first multicast/broadcast service, whether the first multicast/broadcast session has been established.

If no first multicast/broadcast session has been established, S509 is performed: The first base station triggers establishment of the first multicast/broadcast session, obtains context of the first multicast/broadcast session in a process of establishing the first multicast/broadcast session, and performs a reception configuration of first multicast/broadcast data based on QoS information in the context. Optionally, the first base station may further send the data and/or the reception configuration of the first multicast/broadcast service to the UE.

If the first multicast/broadcast session has been established, the first base station may send data and/or the reception configuration of the first multicast/broadcast data. For example, the first base station may send the reception configuration on a non-UE channel. For example, the first base station may send the reception configuration on an MCCH, an MCH, or the like. Alternatively, the first base station may send the reception configuration to the UE through an RRC message.

Based on the procedure shown in FIG. 10, when the UE has joined the first multicast/broadcast service and is in the RRC-inactive state, if the UE determines to move out of the registration area or the RNA area, and/or determines that no data of the first multicast/broadcast service is received, the UE may send the ninth message or the tenth message to the AMF, so that a network side notifies the base station to establish a session of the first multicast/broadcast service or send the reception configuration used to receive the data of the first multicast/broadcast service, so that the UE can resume/receive the data of the first multicast/broadcast service.

An embodiment of this application further provides another communication method, so that when UE moves in an RNA area, a base station can establish a first multicast/broadcast session and/or update context of the first multicast/broadcast session in a timely manner, to improve network resource utilization.

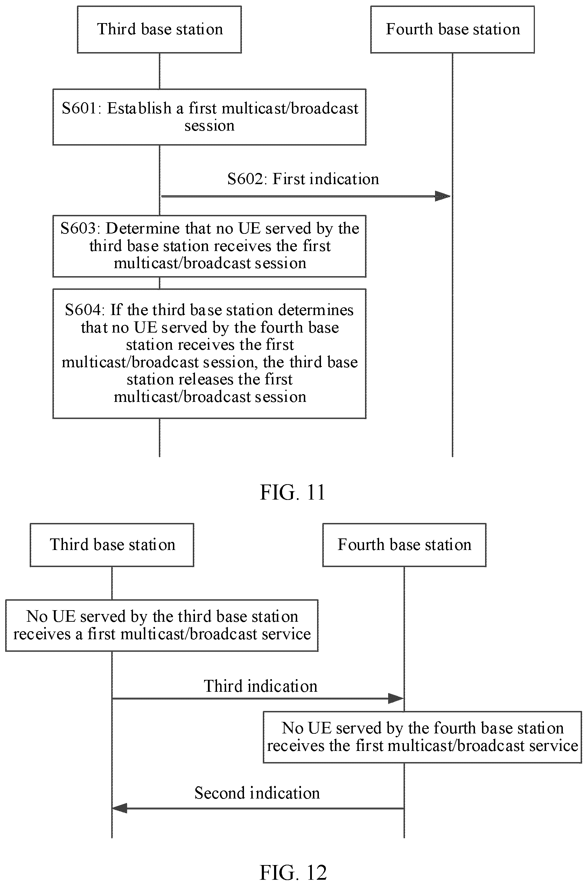

The method may be implemented by a third access network device (for example, a third base station) and a fourth access network device (for example, a fourth base station). The following uses an example in which the method is performed by UE, an AMF, an SMF, and a base station for description. As shown in the FIG. 11, the communication method may include the following steps.

S601: A third base station establishes a first multicast/broadcast session, where the first multicast/broadcast session is used to transmit data of a first multicast/broadcast service.

Optionally, the third base station may establish the first multicast/broadcast session based on a request of UE for requesting to join the first multicast/broadcast service. The first multicast/broadcast session includes 5G core network shared multicast/broadcast service traffic delivery (5GC shared MBS traffic delivery).

For example, the third base station may receive, from a core network, for example, an SMF, a message for requesting to join the first multicast/broadcast service, where the request message may carry an identifier of the first multicast/broadcast service. The third base station may establish the first multicast/broadcast session in response to the request message.

S602: The third base station sends a first indication to at least one fourth base station, where the first indication indicates or triggers the fourth base station to establish a multicast/broadcast session (that is, the first multicast/broadcast session) of the first multicast/broadcast service or shared multicast/broadcast service traffic delivery of the first multicast/broadcast session.

The fourth base station and the third base station are located in or in a same RNA area.

Correspondingly, the at least one fourth base station may establish the first multicast/broadcast session in response to the first indication.

Based on S601 and S602, when the third base station in the RNA area establishes the first multicast/broadcast session, the third base station may trigger, based on the first indication, another base station (that is, the fourth base station) in the RNA area to establish the first multicast/broadcast session. Therefore, even if the UE moves from a coverage area of the third base station to a coverage area of another fourth base station, because the fourth base station has established the first multicast/broadcast session, the UE may receive data of the first multicast/broadcast service from the fourth base station, and the fourth base station does not need to establish the first multicast/broadcast session. This can reduce a transmission delay of the multicast/broadcast service and improve service quality.

Optionally, after determining to move from the third base station to the fourth base station, the UE may notify, according to the methods shown in FIG. 6 to FIG. 10 provided in embodiments of this application, the third base station and/or the fourth base station to update the first multicast/broadcast session.

Further optionally, the procedure shown in FIG. 11 may further include the following steps.

S603: The third base station determines or finds that no UE served by the third base station receives the first multicast/broadcast service/session.

Herein, that no UE served by the third base station receives the first multicast/broadcast session may be because the UE leaves the service, or the UE moves out of the coverage area of the third base station, or the like. This is not specifically required. For example, when there is no identifier of any terminal device in session context of the first multicast/broadcast service, or a quantity of terminal devices in the session context is 0, the base station determines or finds that no UE served by the base station receives the first multicast/broadcast service/session.

S604: If the third base station determines that no UE served by the fourth base station receives the first multicast/broadcast session, the third base station releases the first multicast/broadcast session.

In other words, only when no UE served by any base station in the RNA receives the first multicast/broadcast session, the base stations (including the third base station and the fourth base station) in the RNA each release the first multicast/broadcast session or releases shared multicast/broadcast service traffic delivery of the first multicast/broadcast session. Otherwise, even if no UE served by the third base station receives the first multicast/broadcast service, as long as UE served by any base station in a same RNA receives the first multicast/broadcast service, the third base station does not release the first multicast/broadcast session or does not release shared multicast/broadcast service traffic delivery of the first multicast/broadcast session. This prevents the third base station from reestablishing the first multicast/broadcast session after UE under another base station in the RNA moves to the coverage area of the third base station. Therefore, quality of service of the multicast/broadcast service can be improved, and service interruption can be avoided.

For example, in a possible implementation of S603, the third base station may receive a second indication from the at least one fourth base station, where the second indication indicates that no UE served by a fourth access network device receives the first multicast/broadcast service, or the second indication may indicate that UE served by the fourth access network device receives the data of the first multicast/broadcast service. Therefore, the third base station may determine, based on the second indication, whether UE served by the another base station in the RNA receives the first multicast/broadcast service, and may further determine, based on the determining, whether to trigger to release the first multicast/broadcast session or release shared multicast/broadcast service traffic delivery of the first multicast/broadcast session.

The third base station may send a third indication to the at least one fourth base station after last UE of the third base station leaves the first multicast/broadcast service, where the third indication may indicate that the last UE of the third base station leaves the first multicast/broadcast service, the third indication may be used to determine whether all terminal devices in the fourth access network device leave the first multicast/broadcast service, or the third indication may indicate that no UE served by the third base station receives the data of the first multicast/broadcast service.

For example, as shown in FIG. 12, when no UE served by the third base station receives the first multicast/broadcast service, the third base station may send the third indication to the fourth base station. After receiving the third indication, any fourth base station may determine whether UE served by the any fourth base station receives the first multicast/broadcast service. If no UE served by the fourth base station receives the first multicast/broadcast service, the second indication is sent to the third base station. Otherwise, if at least one UE served by the fourth base station receives the first multicast/broadcast service, the fourth base station does not send the second indication, and the fourth base station may send a fourth indication to indicate that UE served by the fourth base station receives the first multicast/broadcast service. If receiving the second indication sent by the fourth base station, the third base station may determine that no UE served by any base station in the RNA receives the first multicast/broadcast service.

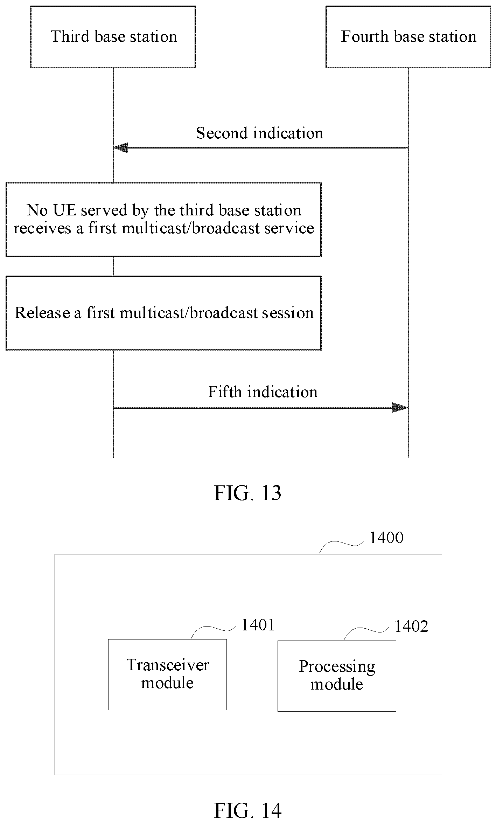

In addition, in another example, as shown in FIG. 13, the second indication may alternatively be obtained by the third base station from another fourth base station before the third base station sends the third indication. The second indication may be sent after the fourth base station determines that no UE served by the fourth base station receives the first multicast/broadcast service. For example, before finding that no UE served by the third base station receives the first multicast/broadcast service, the third base station receives the second indication from the at least one fourth base station, where the second indication from the fourth base station may indicate that no UE served by the fourth base station receives the first multicast/broadcast service. In this case, after receiving the second indication from the fourth base station, and after no UE served by the third base station receives the first multicast/broadcast service, the third base station may determine that no UE served by any base station in the RNA receives the first multicast/broadcast service. Therefore, releasing of the first multicast/broadcast session or releasing of shared multicast/broadcast service traffic delivery of the first multicast/broadcast session may be performed/triggered. Optionally, in this example, the third base station may further send a fifth indication to the another fourth base station, where the fifth indication may be used to trigger the fourth base station to release the first multicast/broadcast session of the fourth base station or release shared multicast/broadcast service traffic delivery of the first multicast/broadcast session.

It should be understood that any one of the first indication, the second indication, the third indication, the fourth indication, or the fifth indication may include the identifier of the first multicast/broadcast service.

It should be further understood that a function of the first indication, the second indication, the third indication, the fourth indication, or the fifth indication may also be implemented by using a message, indication information, an identifier, or the like. This is not specifically limited in this application.

Based on the foregoing method embodiments, an embodiment of this application further provides a communication apparatus. A structure of the apparatus is shown in FIG. 14, and the apparatus includes a transceiver module (or a communication module) 1401 and a processing module 1402. The transceiver module 1401 may include at least one of a receiving module and a sending module, and is configured to implement at least one of information receiving and sending. The processing module 1402 may be configured to generate information sent by the transceiver module 1401, or is configured to process information received by the transceiver module 1401. The processing module 1402 may also be configured to perform actions other than receiving and sending in the foregoing method embodiments. The apparatus 1400 may be applied to at least one of a terminal device, a first access network device, a second access network device, a mobility management network element, a session management network element, an access network device, a third access network device, and a fourth access network device, to implement the communication methods shown in FIG. 6 to FIG. 13.

When being configured to implement the terminal device provided in embodiments of this application, the communication apparatus may include the terminal device. When implementing a function of the terminal device, the processing module 1402 may be configured to: determine that an access network device changes to a first access network device, or determine that a cell changes to a cell of the first access network device, where the terminal device has joined a first multicast/broadcast service and is in an RRC inactive state. And/or, the processing module 1402 may be configured to determine that no data of a first multicast/broadcast service is received, where the terminal device has joined the first multicast/broadcast service and is in a radio resource control inactive state. The transceiver module 1401 may be configured to send at least one of a first message, a second message, a third message, a ninth message, or a tenth message to the first access network device, where the first message indicates the first access network device to send data of the first multicast/broadcast service; the second message indicates the first access network device to update context of the first multicast/broadcast service; the third message is used to resume an RRC connection of the terminal device; the ninth message is used to activate a user plane connection; and the tenth message is used to request registration.

In a possible implementation, the terminal device is allowed to receive multicast/broadcast in the radio resource control inactive state.

In a possible implementation, the transceiver module 1401 may be further configured to receive first information, where the first information includes an identifier of the first access network device and/or an identifier of the cell of the first access network device. The processing module 1402 may be further configured to: determine, based on the first information, that the access network device changes to the first access network device, or determine that the cell changes to the cell of the first access network device.

In a possible implementation, the transceiver module 1401 may be further configured to receive second information, where the second information indicates at least one of the following: a quantity of digits of the first information that are occupied by the identifier of the access network device; a coding scheme of the identifier of the access network device in the first information; and a coding scheme of the identifier of the cell in the first information.

In a possible implementation, the transceiver module 1401 may be further configured to: receive the data of the first multicast/broadcast service (or determine that the data of the first multicast/broadcast service is received), and send the second message and/or the third message, send the second message and/or the ninth message, or send the second message and/or the tenth message to the first access network device.

In a possible implementation, the processing module 1402 may be further configured to determine (or find) that there is no transmission of the first multicast/broadcast service (or no transmission of the first multicast/broadcast service is received), and the transceiver module 1401 may be further configured to send the first message and/or the third message, the first message and/or the ninth message, or the first message and/or the tenth message to the first access network device.

In a possible implementation, at least one of the first message, the second message, or the third message includes at least one of an identifier of the terminal device, an identifier of the first multicast/broadcast service, a first protocol data unit PDU session identifier, or a sending reason of the message (or referred to as a reason for sending the message), and the first PDU session is associated with the first multicast/broadcast service.

In a possible implementation, the transceiver module 1401 may be further configured to receive information about a first area, where the first area is a service area of a second access network device. The processing module 1402 may be further configured to determine to move out of the first area, and the transceiver module 1401 may be further configured to send the third message.

In a possible implementation, if the processing module 1402 determines that the access network device changes from the second access network device to the first access network device, at least one of the first message, the second message, or the third message includes an identifier and/or an address of the second access network device.

In a possible implementation, the processing module 1402 may be further configured to determine to move out of an access network notification area, and the transceiver module 1401 may be further configured to send the ninth message.

In a possible implementation, the processing module 1402 may be further configured to determine to move out of a registration area, and the transceiver module 1401 may be further configured to send the tenth message. Therefore, the terminal device may send the tenth message when determining that no data of the first multicast/broadcast service is received and determining to move out of the registration area.

In a possible implementation, the transceiver module 1401 may be further configured to receive a seventh message from the first access network device, where the seventh message includes a first configuration or first capability information, the first configuration includes a configuration used to receive the first multicast/broadcast service, and the first capability information indicates whether the first access network device supports receiving in the radio resource control RRC inactive state, or the first capability information indicates whether the first access network device supports in receiving the first multicast/broadcast service in the RRC inactive state, or the first capability information indicates whether the first access network device supports UE in receiving the data of the first multicast/broadcast service in the RRC inactive state.

When being configured to implement the first access network device (for example, a first base station) provided in embodiments of this application, the communication apparatus may include the first access network device. When implementing a function of the first access network device, the transceiver module 1401 may be configured to receive at least one of a first message, a second message, a third message, a ninth message, or a tenth message from a terminal device, where the first message notifies/indicates to send first multicast/broadcast data, and the terminal device has joined a first multicast/broadcast service and is in a radio resource control inactive state; the second message notifies/indicates the first access network device to update context of the first multicast/broadcast service; the third message is used to resume an RRC connection of the terminal device; the ninth message is used to activate a user plane connection; and the tenth message is used to request registration. At least one of the first message, the second message, or the third message includes an identifier and/or an address of a second access network device. The transceiver module 1401 may be further configured to send a fourth message, a fifth message, or an eighth message to the second access network device based on the identifier and/or the address of the second access network device, where the fourth message is used to update the context of the first multicast/broadcast service, the fifth message is used to extract context of the terminal device, and the eighth message is used to authenticate whether the terminal device has joined the first multicast/broadcast service.

In a possible implementation, the transceiver module 1401 may be further configured to send the ninth message or the tenth message to an access management network element, where the ninth message or the tenth message carries a first protocol data unit PDU session identifier, the first protocol data unit PDU session identifier carried in the ninth message or the tenth message is used to activate a first PDU session or is used to activate a connection of the first PDU session, and the first PDU session is associated with the first multicast/broadcast service.

In a possible implementation, at least one of the first message, the second message, or the third message includes an identifier of the terminal device and/or an identifier of the first multicast/broadcast service.

In a possible implementation, the fourth message, the fifth message, or the eighth message includes an identifier of the terminal device and/or an identifier of the first multicast/broadcast service.

In a possible implementation, the transceiver module 1401 may be further configured to receive a sixth message from the second access network device, where the sixth message includes at least one piece of the following information: a first configuration, context information of the terminal device, information about the first multicast/broadcast service, and first capability information. The first configuration includes a configuration used to receive the first multicast/broadcast service. The first access network device sends a seventh message, where the seventh message includes the first configuration or the first capability information. The first capability information indicates whether the first access network device supports UE in receiving the data of the first multicast/broadcast service in the RRC inactive state.

When being configured to implement the second access network device (for example, a second base station) provided in embodiments of this application, the communication apparatus may include the first access network device. When implementing a function of the first access network device, the transceiver module 1401 may be configured to receive, by the second access network device, at least one of a fourth message, a fifth message, or an eighth message from a first access network device, where the fourth message is used to update context of a first multicast/broadcast service, the fifth message is used to extract context of a terminal device, the eighth message is used to authenticate whether the terminal device has joined the first multicast/broadcast service, and the terminal device has joined the first multicast/broadcast service and is in a radio resource control inactive state. The processing module 1402 may be configured to update the context of the first multicast/broadcast service.

In a possible implementation, the fourth message, the fifth message, or the eighth message includes an identifier of the terminal device and/or an identifier of the first multicast/broadcast service.

In a possible implementation, the processing module 1402 may be further configured to update a quantity of terminal devices in the context of the first multicast/broadcast service based on a quantity of terminal devices.

In a possible implementation, at least one of the fourth message, the fifth message, or the eighth message includes the identifier of the terminal device, and the second access network device may further delete (or remove) the identifier of the terminal device from the context of the first multicast/broadcast service.

In a possible implementation, the transceiver module 1401 may be further configured to send a sixth message to the first access network device, where the sixth message includes a first configuration, and the first configuration includes a configuration used to receive the first multicast/broadcast service.

In a possible implementation, the transceiver module 1401 may be further configured to send information about a first area to the terminal device, where the first area includes at least one of the following: an identifier of the second access network device, a cell included in the second access network device, a tracking area code of the second access network device, an access network area code of the second access network device, and a service area of the second access network device.

In a possible implementation, the processing module 1402 may be further configured to: when determining that a first timer expires, release, by the second access network device, a first transmission resource, where the first transmission resource is used to transmit the first multicast/broadcast service. Optionally, the first transmission resource includes a first multicast/broadcast session.

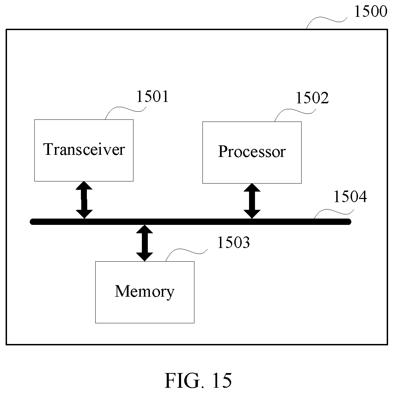

Based on the foregoing embodiments, an embodiment of this application further provides a communication apparatus. The device is configured to implement the communication methods in the foregoing figures. Refer to FIG. 15. The communication apparatus 1500 may include at least one of a transceiver 1501, a processor 1502, and a memory 1503. The transceiver 1501, the processor 1502, and the memory 1503 are connected to each other.

Optionally, the transceiver 1501, the processor 1502, and the memory 1503 are connected to each other through a bus 1504. The bus 1504 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 15, but this does not mean that there is only one bus or only one type of bus.

The transceiver 1501 is configured to receive and send data, to implement communication with another device. For example, the transceiver 1501 may be configured to perform a function of the transceiver module 1401.

Optionally, the transceiver may include a communication interface. The communication interface may be used for communication of the communication apparatus 1500. For example, the communication interface may be configured to implement the function shown in the transceiver module 1401 in a wired manner.

The processor 1502 is configured to implement the communication methods in the foregoing figures. For details, refer to the descriptions in the foregoing embodiments. For example, the processor 1502 may be configured to perform a function of the processing module 1402.

The memory 1503 is configured to store program instructions and the like. Specifically, the program instructions may include program code, and the program code includes computer operation instructions. The memory 1503 may include a random access memory (random access memory, RAM) and may further include a non-volatile memory (non-volatile memory), for example, at least one magnetic disk memory. The processor 1502 executes the program instructions stored in the memory 1503, to implement the foregoing functions, thereby implementing the communication method provided in the foregoing embodiments.

It should be understood that at least one of the transceiver module 1401 and the transceiver 1501 shown above may be configured to perform: an action of sending information, a notification, or a message performed by a communication device or apparatus such as a terminal device, a first access network device, or a second access network device, and/or perform an action of receiving information, a notification, or a message performed by a communication device or apparatus such as a terminal device, a first access network device, or a second access network device.

At least one of the processing module 1402 and the processor 1502 may be configured to perform a processing action of a first device or a second device, for example, including: A terminal device determines that an access network device changes or a cell changes, generates the information, the notification, or the message sent by at least one of the transceiver module 1401 and the transceiver 1501, processes the information, the notification, or the message received by at least one of the transceiver module 1401 and the transceiver 1501, or the like.

It should be further understood that in steps performed by at least one of the transceiver module 1401, the transceiver 1501, the processing module 1402, and the processor 1502, for related technical terms, nouns, action implementations, and the like, refer to descriptions of corresponding technical terms, nouns, and action implementations in FIG. 6 to FIG. 13 in the method embodiments of this application.

Based on the foregoing embodiments, an embodiment of this application further provides a communication method. As shown in FIG. 6, the method is implemented by a terminal device and a first access network device. Optionally, as shown in FIG. 7 to FIG. 9, the method may alternatively be implemented by a terminal device, a first access network device, and a second access network device. Alternatively, as shown in FIG. 10, the communication method may be implemented by a terminal device, a mobility management network element, a session management network element, and an access network device. Alternatively, as shown in FIG. 11 to FIG. 13, the communication method may be implemented by a third access network device and a fourth access network device. For the method, refer to the descriptions of the methods shown in FIG. 6 to FIG. 13 in this application.

Based on the foregoing embodiments, an embodiment of this application further provides a system. The system may include the terminal device and the first access network device, may include a terminal device, a first access network device, and a second access network device, may include a terminal device, a mobility management network element, a session management network element, and an access network device, or may include a third access network device and a fourth access network device.

According to the foregoing embodiments, an embodiment of this application further provides a computer program. When the computer program is run on a computer, the computer is enabled to perform the communication method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the communication method provided in the foregoing embodiments.

According to the foregoing embodiments, an embodiment of this application further provides a chip. The chip is configured to read a computer program stored in a memory, to implement the communication method provided in the foregoing embodiments. The chip may include a processor.

Based on the foregoing embodiments, an embodiment of this application provides a chip system. The chip system includes a processor, configured to support the computer apparatus in implementing functions related to at least one of the terminal device, the first access network device, the second access network device, the mobility management network element, the session management network element, the access network device, the third access network device, and the fourth access network device in the foregoing embodiments. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Apparently, a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies in this application.

"A plurality of" in this application refers to two or more than two. The term "and/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects. "Including at least one of A, B, or C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining, by a terminal device, that an access network device changes to a first access network device, or determining that a cell changes to a cell of the first access network device, wherein the terminal device has joined a first multicast/broadcast service and is in a radio resource control RRC inactive state; and
sending, by the terminal device, at least one of a first message, a second message, a third message, a ninth message, or a tenth message to the first access network device, wherein
the first message indicates the first access network device to send data of the first multicast/broadcast service;
the second message indicates the first access network device to update context of the first multicast/broadcast service;
the third message is used to resume an RRC connection of the terminal device;
the ninth message is used to activate a user plane connection; and
the tenth message is used to request registration.

2. A communication method, comprising:
determining, by a terminal device, that no data of a first multicast/broadcast service is received, wherein the terminal device has joined the first multicast/broadcast service and is in an RRC inactive state; and
sending, by the terminal device, at least one of a first message, a second message, a third message, a ninth message, or a tenth message to a first access network device, wherein
the first message indicates the first access network device to send data of the first multicast/broadcast service;
the second message indicates the first access network device to update context of the first multicast/broadcast service;
the third message is used to resume an RRC connection of the terminal device;
the ninth message is used to activate a user plane connection; and
the tenth message is used to request registration.

3. The method according to claim 2, wherein the method further comprises:
determining, by the terminal device, that an access network device changes to the first access network device, or determining that a cell changes to a cell of the first access network device.

4. The method according to any one of claims 1 to 3, wherein the terminal device is allowed to receive multicast/broadcast in the RRC inactive state.

5. The method according to any one of claims 1 to 4, wherein the determining, by a terminal device, that an access network device changes to a first access network device, or determining that a cell changes to a cell of the first access network device comprises:
receiving, by the terminal device, first information, wherein the first information comprises an identifier of the first access network device and/or an identifier of the cell of the first access network device; and
determining, by the terminal device based on the first information, that the access network device changes to the first access network device, or determining that the cell changes to the cell of the first access network device.

6. The method according to claim 5, wherein the method further comprises:
receiving, by the terminal device, second information, wherein the second information indicates at least one of the following:
a quantity of digits of the first information that are occupied by the identifier of the access network device;
a coding scheme of the identifier of the access network device in the first information; and
a coding scheme of the identifier of the cell in the first information.

7. The method according to any one of claims 1 to 6, wherein the method further comprises:
receiving, by the terminal device, the data of the first multicast/broadcast service; and
the sending, by the terminal device, at least one of a first message, a second message, a third message, a ninth message, or a tenth message to the first access network device comprises:
sending, by the terminal device, the second message and/or the third message to the first access network device;
sending, by the terminal device, the second message and/or the ninth message to the first access network device; or
sending the second message and/or the tenth message to the first access network device.

8. The method according to any one of claims 1 to 7, wherein the method further comprises:
determining, by the terminal device, that no transmission of the first multicast/broadcast service is received; and
the sending, by the terminal device, at least one of a first message, a second message, a third message, a ninth message, or a tenth message to the first access network device comprises:
sending, by the terminal device, the first message and/or the third message to the first access network device;
sending, by the terminal device, the first message and/or the ninth message to the first access network device; or
sending the first message and/or the tenth message to the first access network device.

9. The method according to any one of claims 1 to 8, wherein at least one of the first message, the second message, the third message, the ninth message, or the tenth message comprises at least one of an identifier of the terminal device, an identifier of the first multicast/broadcast service, a first protocol data unit PDU session identifier, or a sending reason of the message, and the first PDU session is associated with the first multicast/broadcast service.

10. The method according to any one of claims 1 to 9, wherein the method further comprises:
receiving, by the terminal device, information about a first area, wherein the first area is a service area of a second access network device;
the determining, by a terminal device, that an access network device changes to a first access network device comprises:
determining, by the terminal device, to move out of the first area; and
the sending, by the terminal device, at least one of a first message, a second message, a third message, a ninth message, or a tenth message to the first access network device comprises:
sending, by the terminal device, the third message.

11. The method according to any one of claims 1 to 10, wherein the determining, by a terminal device, that an access network device changes to a first access network device comprises:
determining, by the terminal device, that the access network device changes from the second access network device to the first access network device, wherein at least one of the first message, the second message, the third message, the ninth message, or the tenth message comprises an identifier and/or an address of the second access network device.

12. The method according to any one of claims 2 and 4 to 10, wherein the method further comprises:
determining, by the terminal device, to move out of an access network notification area RNA; and
the sending, by the terminal device, at least one of a first message, a second message, a third message, a ninth message, or a tenth message to the first access network device comprises:
sending, by the terminal device, the ninth message.

13. The method according to any one of claims 2 and 4 to 10, wherein the method further comprises:
moving, by the terminal device, out of a registration area RA; and
the sending, by the terminal device, at least one of a first message, a second message, a third message, a ninth message, or a tenth message to the first access network device comprises:
sending, by the terminal device, the tenth message.

14. The method according to any one of claims 1 to 13, comprising:
receiving, by the terminal device, a seventh message from the first access network device, wherein the seventh message comprises a first configuration or first capability information, the first configuration comprises a configuration used to receive the first multicast/broadcast service, and the first capability information indicates whether the first access network device supports the terminal device in receiving a multicast/broadcast service in the RRC inactive state.

15. The method according to claim 14, wherein the sending, by the terminal device, the ninth message comprises:
sending, by the terminal device, the ninth message based on the first capability information.

16. A communication method, comprising:
receiving, by a first access network device, at least one of a first message, a second message, a third message, a ninth message, or a tenth message from a terminal device, wherein the first message indicates the first access network device to send first multicast/broadcast data, and the terminal device has joined a first multicast/broadcast service and is in an RRC inactive state; the second message indicates the first access network device to update context of the first multicast/broadcast service; the third message is used to resume an RRC connection of the terminal device; the ninth message is used to activate a user plane connection; and the tenth message is used to request registration;
at least one of the first message, the second message, or the third message comprises an identifier and/or an address of a second access network device; and
sending, by the first access network device, a fourth message, a fifth message, or an eighth message to the second access network device based on the identifier and/or the address of the second access network device, wherein the fourth message is used to update the context of the first multicast/broadcast service, the fifth message is used to extract context of the terminal device, and the eighth message is used to authenticate whether the terminal device has joined the first multicast/broadcast service.

17. The method according to claim 16, comprising:
sending, by the first access network device, the ninth message or the tenth message to an access management network element, wherein the ninth message or the tenth message carries a first protocol data unit PDU session identifier, the first protocol data unit PDU session identifier carried in the ninth message or the tenth message is used to activate a first PDU session or is used to activate a connection of the first PDU session, and the first PDU session is associated with the first multicast/broadcast service.

18. The method according to claim 16, wherein
at least one of the first message, the second message, or the third message comprises an identifier of the terminal device and/or an identifier of the first multicast/broadcast service.

19. The method according to claim 16, wherein the fourth message, the fifth message, or the eighth message comprises an identifier of the terminal device and/or an identifier of the first multicast/broadcast service.

20. The method according to any one of claims 16, 18, and 19, wherein the method further comprises:
receiving, by the first access network device, a sixth message from the second access network device, wherein the sixth message comprises at least one piece of the following information:
a first configuration, context information of the terminal device, information about the first multicast/broadcast service, and first capability information, wherein
the first configuration comprises a configuration used to receive the first multicast/broadcast service; the first access network device sends a seventh message, wherein the seventh message comprises the first configuration or the first capability information; and the first capability information indicates whether the first access network device supports the terminal device in receiving a multicast/broadcast service in the RRC inactive state.

21. A communication method, comprising:
receiving, by a second access network device, at least one of a fourth message, a fifth message, or an eighth message from a first access network device, wherein the fourth message is used to update context of a first multicast/broadcast service, the fifth message is used to extract context of a terminal device, the eighth message is used to authenticate whether the terminal device has joined the first multicast/broadcast service, and the terminal device has joined the first multicast/broadcast service and is in an RRC inactive state; and
updating, by the first access network device, the context of the first multicast/broadcast service.

22. The method according to claim 21, wherein the fourth message, the fifth message, or the eighth message comprises an identifier of the terminal device and/or an identifier of the first multicast/broadcast service.

23. The method according to claim 21 or 22, wherein the updating, by the second access network device, the context of the first multicast/broadcast service comprises:
updating, by the second access network, a quantity of terminal devices in the context of the first multicast/broadcast service based on a quantity of terminal devices.

24. The method according to any one of claims 21 to 23, wherein at least one of the fourth message, the fifth message, or the eighth message comprises the identifier of the terminal device, and the updating, by the first access network device, the context of the first multicast/broadcast service comprises:
deleting, by the second access network device, the identifier of the terminal device from the context of the first multicast/broadcast service.

25. The method according to any one of claims 21 to 24, wherein the method further comprises:
sending, by the second access network device, a sixth message to the first access network device, wherein the sixth message comprises a first configuration, and the first configuration comprises a configuration used to receive the first multicast/broadcast service.

26. The method according to any one of claims 21 to 25, wherein the method further comprises:
sending, by the second access network device, information about a first area to the terminal device, wherein the first area comprises at least one of the following:
an identifier of the second access network device, a cell comprised in the second access network device, a tracking area code of the second access network device, an access network area code of the second access network device, and a service area of the second access network device.

27. The method according to any one of claims 21 to 26, wherein the method further comprises:
when the second access network device determines that a first timer expires, releasing, by the second access network device, a first transmission resource, wherein the first transmission resource is used to transmit the first multicast/broadcast service.

28. A communication apparatus, comprising a processor and a transceiver, wherein
the transceiver is used to support the communication apparatus in communication; and
the processor is configured to execute instructions to implement the method according to any one of claims 1 to 15.

29. A communication apparatus, comprising a processor and a transceiver, wherein
the transceiver is used to support the communication apparatus in communication; and
the processor is configured to execute instructions to implement the method according to any one of claims 16 to 20.

30. A communication apparatus, comprising a processor and a transceiver, wherein
the transceiver is used to support the communication apparatus in communication; and
the processor is configured to execute instructions to implement the method according to any one of claims 21 to 27.
